# EUROPEAN PATENT APPLICATION

(11) **EP 4 541 702 A1**
(43) Date of publication of application: **23.04.2025**
(21) Application number: 24206446.7
(22) Date of filing: 14.10.2024
(51) Int. Cl.: B62J 45/411, B62D 5/04, B62D 6/00, B62D 6/04, B62J 45/413, B62J 45/415, B62K 21/08

(54) **STRADDLED VEHICLE**

(30) Priority: 18.10.2023 JP 2023179606
(71) Applicant: Yamaha Hatsudoki Kabushiki Kaisha, Iwata-shi, Shizuoka 438-8501 (JP)
(72) Inventor: KONNO, Toshihiko, Iwata-shi, 4388501 (JP)
(74) Representative: Studio Torta S.p.A.

(57) **Abstract**

There is described a two-wheel motor vehicle (1) with a vehicle body frame (60), a steering device (19), a front wheel (3), a steering angular velocity detection unit (84), a gyro sensor (70), a restriction device (32), and a restriction control unit (83); the steering device (19) being rotatably supported by the vehicle body frame (60); the front wheel (3) being steered by the steering device (19); when the front wheel (3) is steered by the steering device (19), the steering angle of the front wheel (3) changing; the steering angular velocity detection unit (84) detecting the steering angular velocity of the front wheel (3); the gyro sensor (70) detecting a bank direction of the two-wheel motor vehicle (1); the restriction device (32) restricting a change in the steering angle of the front wheel (3); when a value detected by the steering angular velocity detection unit (84) being equal to or greater than a predetermined value, the restriction control unit (83) causing the restriction device (32) to restrict the change in the steering angle of the front wheel (3) in the bank direction.

## Description

### Technical Field

The present invention relates to a straddled vehicle.

### Prior art

A straddled vehicle described in JP 2013-60187 A includes a steering angle sensor, an actuator, and a control device. The steering angle sensor detects a steering angle. The actuator generates steering torque. On the basis of a result detected by the steering angle sensor, the control device controls the steering torque generated by the actuator.

### JP 2013-60178 A

In a conventional straddled vehicle, a control device controls steering torque on the basis of a steering angle. Therefore, it may be difficult to appropriately maintain a posture of the straddled vehicle.

### Description of the invention

The present invention has been made in view of such circumstances, and an object of the present invention is to provide control of a straddled vehicle advantageous for achieving an appropriate posture in a straddled vehicle.

In order to solve the above-described problem, the present invention has the following configurations.

That is, the present invention is a straddled vehicle including
a vehicle body frame,
a steering device rotatably supported by the vehicle body frame,
a front wheel that is steered by the steering device and changes a steering angle of the steering device;
a first detection unit that detects at least any one of steering angular velocity of the front wheel, acceleration of a steering angle of the front wheel, and steering torque of the front wheel,
a posture detection unit that detects a bank direction of the straddled vehicle,
a restriction unit that is able to restrict a change in a steering angle of the front wheel, and
a control unit that causes the restriction unit to restrict a change in the steering angle of the front wheel in the bank direction when a value detected by the first detection unit is equal to or greater than a predetermined value.

The straddled vehicle includes the vehicle body frame, the steering device, the front wheel, the first detection unit, the posture detection unit, the restriction unit, and the control unit. The steering device is rotatably supported by a vehicle body frame. The front wheel is steered by the steering device. When the front wheel is steered by the steering device, the steering angle of the front wheel changes. The first detection unit detects at least one of steering angular velocity of the front wheel, acceleration of a steering angle at the front wheel, or steering torque at the front wheel. The posture detection unit detects a bank direction of the straddled vehicle. The restriction unit restricts a change in the steering angle of the front wheel. The control unit controls the restriction unit on the basis of a result detected by the first detection unit and a result detected by the posture detection unit.

Specifically, when a value detected by the first detection unit is equal to or greater than a predetermined value, the control unit causes the restriction unit to restrict the change in the steering angle of the front wheel in the bank direction. In other words, when the detected value reaches or exceeds the predetermined value, the restriction unit restricts the change in the steering angle of the front wheel in the bank direction. When the detected value reaches or exceeds the predetermined value, the restriction unit decreases the steering angular velocity of the front wheel in the bank direction. A period during which the detected value reaches or exceeds the predetermined value is not a long period. The period during which the detected value is equal to or greater than the predetermined value is short. Therefore, even if the detected value reaches or exceeds the predetermined value, it is advantageous for achieving an appropriate posture of the straddled vehicle.

In the above-described straddled vehicle,
when the value detected by the first detection unit is equal to or greater than the predetermined value, the control unit preferably causes the restriction unit to allow a change in the steering angle of the front wheel in a direction opposite to the bank direction.

According to the above-described configuration, the control unit causes the restriction unit to allow the change in the steering angle of the front wheel in a direction opposite to the bank direction. It is easy to decrease the bank angle by changing the steering angle of the front wheel in the direction opposite to the bank direction. By decreasing the bank angle, it is more advantageous for achieving an appropriate posture of the straddled vehicle.

In the above-described straddled vehicle,
when the value detected by the first detection unit is smaller than the predetermined value, the control unit preferably causes the restriction unit to allow a change in the steering angle of the front wheel.

According to the above-described configuration, when the value detected by the first detection unit is smaller than the predetermined value, the change in the steering angle of the front wheel is allowed. With this configuration, when the value detected by the first detection unit is smaller than the predetermined value, it is easy for a driver to quickly change the steering angle of the front wheel. Therefore, when the value detected by the first detection unit is smaller than the predetermined value, it is easy for the driver to steer the straddled vehicle.

In the above-described straddled vehicle,
the control unit preferably causes the restriction unit to allow a change in the steering angle of the front wheel when the straddled vehicle is traveling straight, and the value detected by the first detection unit is equal to or greater than the predetermined value, and
the control unit preferably causes the restriction unit to restrict a change in the steering angle of the front wheel in the bank direction when the straddled vehicle is turning on a curve, and the value detected by the first detection unit is equal to or greater than the predetermined value.

According to the above-described configuration, when the straddled vehicle travels straight, the change in the steering angle of the front wheel is allowed even if the detected value is equal to or greater than the predetermined value. With this configuration, it is possible to provide the straddled vehicle having excellent operability when traveling straight. When the straddled vehicle turns on a curve, it is advantageous for achieving an appropriate posture of the straddled vehicle.

In the above-described straddled vehicle,
when the straddled vehicle is turning on a curve, and the value detected by the first detection unit is equal to or greater than the predetermined value, the control unit preferably causes the restriction unit to allow a change in the steering angle of the front wheel in a direction opposite to the bank direction.

According to the above-described configuration, the control unit causes the restriction unit to allow the change in the steering angle of the front wheel in a direction opposite to the bank direction. With this configuration, it is more advantageous for achieving an appropriate posture of the straddled vehicle.

In the above-described straddled vehicle
further including a speed detection unit that detects speed of the straddled vehicle,
the control unit preferably causes the restriction unit to allow a change in the steering angle of the front wheel when the speed detected by the speed detection unit is low, and the value detected by the first detection unit is equal to or greater than the predetermined value, and
the control unit preferably causes the restriction unit to restrict a change in the steering angle of the front wheel in the bank direction when the speed detected by the speed detection unit is high, and the value detected by the first detection unit is equal to or greater than the predetermined value.

According to the above-described configuration, a change in the steering angle of the front wheel is allowed or not allowed depending on whether or not the speed of the straddled vehicle is high. Specifically, when the speed of the straddled vehicle is low, it is easy for the driver to steer the straddled vehicle. When the speed of the straddled vehicle is high, it is advantageous for achieving an appropriate posture of the straddled vehicle. With this configuration, it is possible to provide the straddled vehicle advantageous for achieving an appropriate posture while minimizing restriction on the front wheel.

In the above-described straddled vehicle,
the predetermined value is preferably greater than an upper limit value of steering angular velocity of the front wheel with self-steering when the straddled vehicle turns on a curve,
the predetermined value is preferably greater than an upper limit value of acceleration of a steering angle of the front wheel with self-steering when the straddled vehicle turns on a curve, or
the predetermined value is preferably greater than an upper limit value of steering torque of the front wheel with self-steering when the straddled vehicle turns on a curve.

According to the above-described configuration, when the straddled vehicle turns on a curve, the predetermined value is greater than the upper limit value of the steering angular velocity of the front wheel with self-steering, greater than the upper limit value of the acceleration of the steering angle of the front wheel with self-steering, or greater than the upper limit value of the steering torque of the front wheel with self-steering. With this configuration, it is possible to provide the straddled vehicle advantageous for achieving an appropriate posture while reliably allowing the change in the steering angle of the front wheel by the self-steering.

In the above-described straddled vehicle,
steering angular velocity of the front wheel with the self-steering, acceleration of a steering angle of the front wheel with the self-steering, or steering torque of the front wheel with the self-steering preferably depends on angular velocity of a bank angle of the straddled vehicle.

According to the above-described configuration, the steering angular velocity of the front wheel with the self-steering, the acceleration of the steering angle of the front wheel with the self-steering, or the steering torque of the front wheel with the self-steering depends on the angular velocity of the bank angle of the straddled vehicle. Therefore, the steering angular velocity of the front wheel by the self-steering can be accurately decided.

In the above-described straddled vehicle,
the control unit preferably causes the restriction unit to restrict a change in the steering angle of the front wheel in the bank direction when angular velocity of a bank angle of the straddled vehicle is 50 deg/s.

According to the above-described configuration, when the angular velocity of the bank angle of the straddled vehicle is 50 deg/s, the control unit causes the restriction unit to restrict a change in the steering angle of the front wheel in the bank direction. With this configuration, it is possible to provide the straddled vehicle advantageous for achieving an appropriate posture.

In the above-described straddled vehicle,
the control unit preferably causes the restriction unit to allow a change in the steering angle of the front wheel when angular velocity of a bank angle of the straddled vehicle is 10 deg/s.

According to the above-described configuration, when the angular velocity of the bank angle of the straddled vehicle is 10 deg/s, the predetermined value causes the restriction unit to allow a change in the steering angle of the front wheel in the bank direction. With this configuration, it is possible to provide the straddled vehicle advantageous for achieving an appropriate posture.

In the above-described straddled vehicle,
the first detection unit preferably detects rotation of the steering device with respect to the vehicle body frame.

According to the above-described configuration, the first detection unit detects the steering angular velocity of the front wheel by detecting a relative rotation amount of the steering device with respect to the vehicle body frame. With this configuration, the steering angular velocity of the front wheel can be reliably detected.

In the above-described straddled vehicle,
the first detection unit is preferably a torque sensor that detects twist of the steering device.

According to the above-described configuration, the first detection unit is a torque sensor that detects twist of the steering device. According to such a configuration, the first detection unit can be configured with a small number of components.

In the above-described straddled vehicle,
the restriction unit preferably restricts rotation of the steering device with respect to the vehicle body frame.

According to the above-described configuration, the restriction unit restricts rotation of the steering device with respect to the vehicle body frame. With this configuration, it is easy for the restriction unit to restrict the change in the steering angle of the front wheel.

In the above-described straddled vehicle,
the restriction unit preferably includes
a braking mechanism that applies braking force for braking rotation of a steering device with respect to the vehicle body frame.

According to the above-described configuration, the restriction unit includes the braking mechanism. The braking mechanism applies braking force that brakes the rotation of the steering device with respect to the vehicle body frame. With this configuration, the restriction unit can actively stop the rotation of the steering device with respect to the vehicle body frame. Therefore, it is possible to provide the straddled vehicle that can more reliably restrict the change in the steering angle of the front wheel.

In the above-described straddled vehicle,
the restriction unit is preferably a steering damper that resists rotation of a steering device with respect to a vehicle body frame, and
the steering damper preferably includes
a cylinder tube,
a piston that moves by hydraulic pressure in the cylinder tube,
a main shaft integrated with the piston, in which at least a tip end of the main shaft protrudes from one end of the cylinder tube, and
a damping force adjustment unit that is able to, according to control by the restriction unit, adjust hydraulic pressure experienced by the piston.

The restriction unit includes the steering damper. The steering damper includes the cylinder tube, the piston, the main shaft, and the damping force adjustment unit. The damping force adjustment unit can adjust the hydraulic pressure experienced by the piston, according to control by the restriction control unit. With this configuration, the restriction unit can be configured by using an existing component with high reliability.

The straddled vehicle of the present invention is advantageous for achieving an appropriate posture.

### Brief description of the drawings

FIG. 1 is a plan view for describing an overall configuration of a two-wheel motor vehicle according to a first embodiment;
FIG. 2 is a left side view for describing a vehicle body frame according to the first embodiment;
FIG. 3 is a front view for describing a steering device according to the first embodiment;
FIG. 4 is a plan view for describing a top bridge according to the first embodiment;
FIG. 5 is a perspective view for describing the steering device according to the first embodiment;
FIG. 6 is a schematic view for describing operation of a restriction device according to the first embodiment;
FIG. 7 is a schematic view for describing operation of the restriction device according to the first embodiment;
FIG. 8 is a schematic view for describing operation of the restriction device according to the first embodiment;
FIG. 9 is a flowchart for describing operation of the restriction device according to the first embodiment;
FIGS. 10A and 10B are schematic views each for describing an effect of the two-wheel motor vehicle according to the first embodiment;
FIGS. 11A and 11B are schematic views each for describing an effect of the two-wheel motor vehicle according to the first embodiment;
FIGS. 12A and 12B are schematic views each for describing an effect of the two-wheel motor vehicle according to the first embodiment;
FIG. 13 is a perspective view for describing a steering device according to a second embodiment;
FIG. 14 is a cross-sectional view for describing a configuration of a steering damper according to the second embodiment;
FIG. 15 is a schematic view for describing operation of the steering damper according to the second embodiment;
FIG. 16 is a schematic view for describing operation of the steering damper according to the second embodiment;
FIG. 17 is a perspective view for describing one modification of the present invention;
FIG. 18 is a perspective view for describing one modification of the present invention; and
FIG. 19 is a perspective view for describing one modification of the present invention.

### Embodiments of the invention

A detailed description will hereinafter be given of each embodiment of the present invention with consultation of drawings. A vehicle of the present invention is a straddled vehicle, and includes, for example, an internal combustion engine as power. A straddled vehicle according to each embodiment includes a vehicle body frame, a front wheel, and a rear wheel.

### [First embodiment]

### 1. Overall configuration

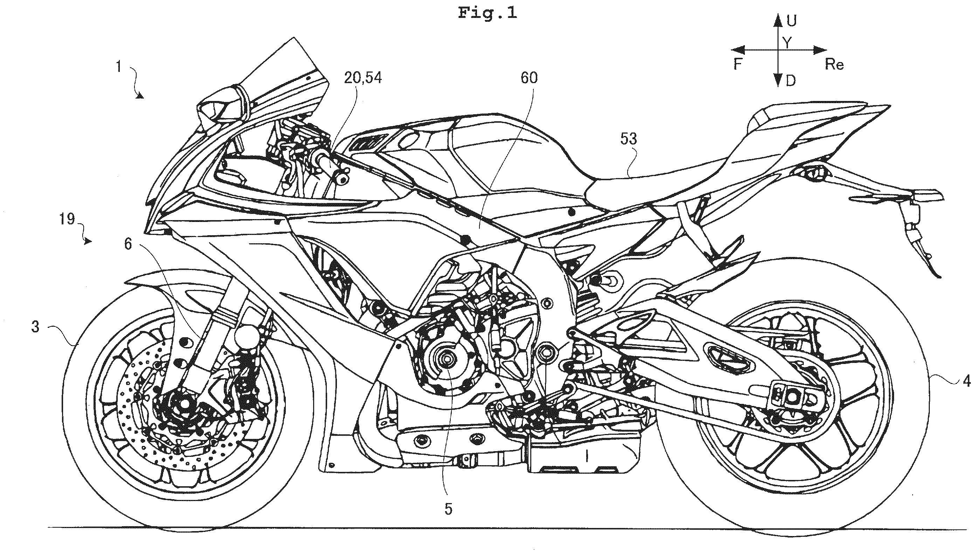

A detailed description will hereinafter be given of a first embodiment of the present invention with consultation of drawings. The vehicle of the first embodiment is an example of a straddled vehicle (on-road vehicle) including a front wheel and a rear wheel. As illustrated in FIG. 1, a two-wheel motor vehicle 1 according to the first embodiment includes a vehicle body frame 60, a front wheel 3, a rear wheel 4, an internal combustion engine (engine) 5, and a seat 53. Furthermore, the two-wheel motor vehicle 1 according to the first embodiment includes front forks 6 that support the front wheel 3 and a handlebar 20 for rotating the front forks 6. To ride on the two-wheel motor vehicle 1, a driver sits on the seat 53 while gripping grips 54 positioned at tip ends of the handlebar 20 and straddles the two-wheel motor vehicle 1. When the driver operates the handlebar 20 in this state, a steering device 19 including the front forks 6 and the like is rotated, and a steering angle of the front wheel 3 is changed.

Note that the reference sign F in FIG. 1 denotes forward of the vehicle, and the reference sign Re denotes rearward of the vehicle. Furthermore, in FIG. 1, the reference sign U denotes an upward direction of the vehicle, and the reference sign D denotes a downward direction of the vehicle. A width direction Y is a direction orthogonal to a front-rear direction and an up-down direction. The front-rear direction, the up-down direction, and the width direction Y are defined with reference to the driver. In the following drawings as well, these reference signs are appropriately denoted in order to clarify a direction of each member installed in the two-wheel motor vehicle 1. Note that the front-rear direction of the vehicle will be described on the basis of the vehicle body frame 60. Therefore, there is no change in the front-rear direction of the vehicle depending on operation of the steering device 19 by the driver.

### 2. Vehicle body frame

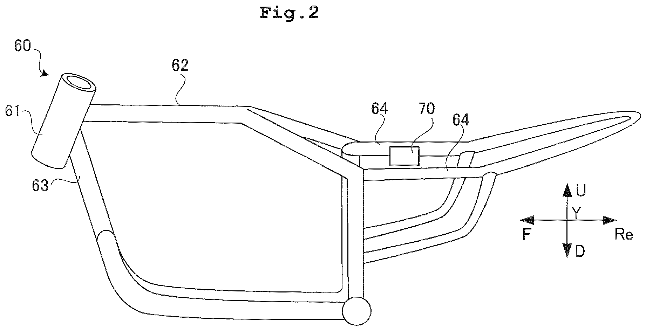

FIG. 2 describes the vehicle body frame 60 of the first embodiment. The vehicle body frame 60 is configured to be equipped with the engine 5 and the like, and is formed by a plurality of pipes combined forming a framework of the two-wheel motor vehicle 1. The two-wheel motor vehicle 1 is configured by incorporating the steering device 19, the front wheel 3, the rear wheel 4, and the like into the vehicle body frame 60. The vehicle body frame 60 includes a head pipe 61, a top tube 62, a down tube 63, and a seat frame 64. The head pipe 61 rotatably supports the steering device 19. The top tube 62 is a support tube coupled to the seat frame 64. The seat frame 64 is positioned below the seat 53 and configured to support weight of the driver.

### 3. Gyro sensor

A gyro sensor 70 illustrated in FIG. 2 corresponds to a posture detection unit of the present invention. The gyro sensor 70 detects a bank direction of the two-wheel motor vehicle 1. The bank direction is a direction in which the two-wheel motor vehicle 1 is inclined when the two-wheel motor vehicle 1 travels on a curve. For example, when the two-wheel motor vehicle 1 turns to right on the curve, the two-wheel motor vehicle 1 banks to the right, and the bank direction of the two-wheel motor vehicle 1 is rightward. When the two-wheel motor vehicle 1 turns to left on the curve, the two-wheel motor vehicle 1 banks to the left, and the bank direction of the two-wheel motor vehicle 1 is leftward.

The gyro sensor 70 is supported by the seat frame 64. The gyro sensor 70 is a triaxial sensor that detects how much the vehicle (vehicle body frame 60) is inclined in the front-rear direction, the up-down direction, and the width direction Y. The gyro sensor 70 can detect whether the two-wheel motor vehicle 1 is traveling on a curve or traveling straight. Furthermore, the gyro sensor 70 can detect in which direction the two-wheel motor vehicle 1 is banked. Similarly, the gyro sensor 70 can also detect an inclination angle of the two-wheel motor vehicle 1 that is banked. For example, the gyro sensor 70 detects a bank angle of the two-wheel motor vehicle 1. For example, the gyro sensor 70 detects a roll angle that indicates how much the two-wheel motor vehicle 1 is inclined with respect to an axis extending in the front-rear direction with reference to a horizontal plane.

### 4. Steering device

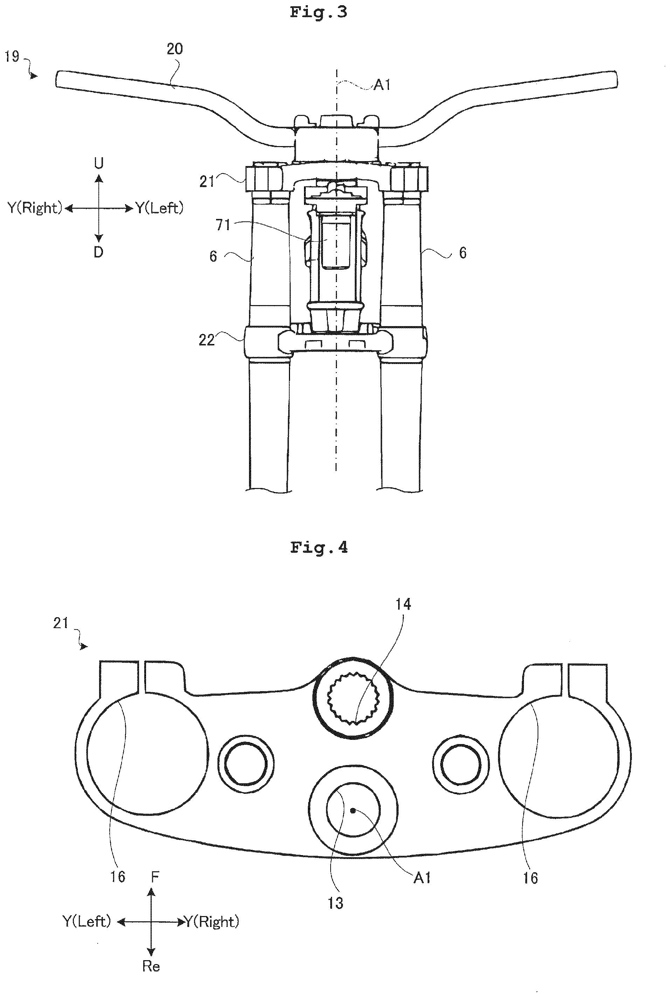

FIG. 3 describes the steering device 19 of the first embodiment. The steering device 19 is provided to steer the front wheel 3 to change the steering angle of the front wheel 3. The steering device 19 is rotatably supported by the vehicle body frame 60. The steering device 19 mainly includes the handlebar 20, a top bridge 21, a bottom bridge 22, and the two front forks 6. The handlebar 20 is a rod-shaped member extending in the width direction Y and including, at both ends thereof, the grips 54 to be gripped by the driver. The top bridge 21 is positioned below the handlebar 20 and is configured to support the front forks 6. The bottom bridge 22 is positioned below the top bridge 21 and is configured to support the front forks 6. The two front forks 6 are parallel with each other and rotatably support the front wheel 3. One of the front forks 6 is disposed on right of the front wheel 3, and another of the front fork 6 is disposed on left of the front wheel 3.

FIG. 4 describes the top bridge 21. The top bridge 21 is a plate-shaped member extending in the width direction Y, and includes a plurality of through holes. A stem bearing part 13 is positioned at a central portion of the top bridge 21 in the width direction Y and has a circular through hole. A center of the through hole coincides with a rotation axis A1 serving as a reference when the steering device 19 rotates. A spline supporting part 14 is positioned in front of the stem bearing part 13 and has a through hole provided with a spline groove. A handlebar stem 24 is inserted into the through hole. Therefore, the top bridge 21 and the handlebar stem 24 are firmly combined. The handlebar stem 24 will be described later. Clamp portions 16 are positioned at both end portions of the top bridge 21 in the width direction Y, and the respective front forks 6 are inserted through the clamp portions. The bottom bridge 22 has a similar configuration to a configuration of the top bridge 21 except that the spline supporting part 14 is omitted.

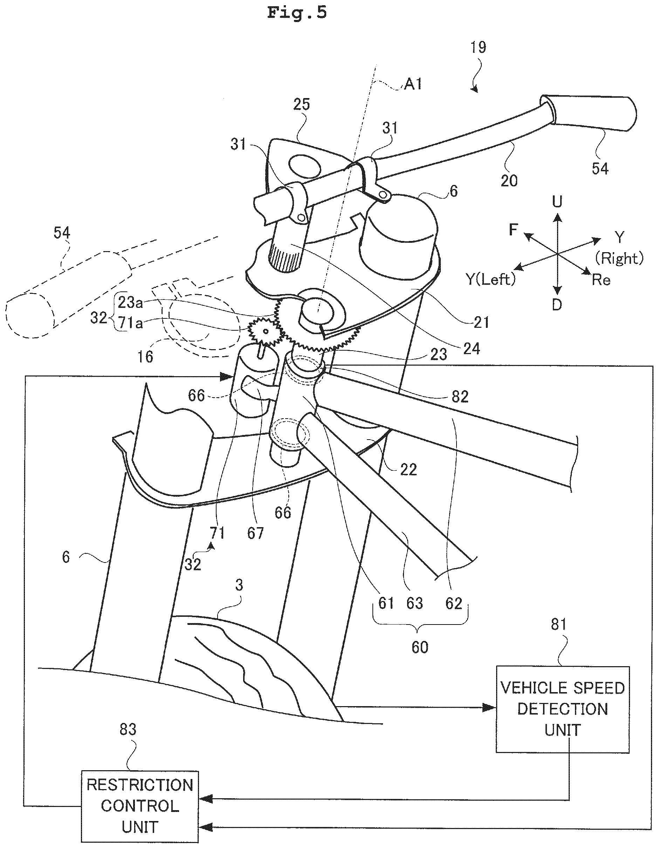

FIG. 5 is a perspective view for describing an overall configuration of the steering device 19. The handlebar stem 24 is coupled to the front forks 6. The handlebar stem 24 is coupled to the front forks 6 through the top bridge 21 and the bottom bridge 22. The handlebar stem 24 is a member extending parallel with the front forks 6, and a handlebar mount stay 25 is mounted on a tip end thereof. The handlebar mount stay 25 holds two handlebar mounts 31 gripping the handlebar 20. Each of the handlebar mounts 31 has a clamp through which the handlebar 20 is inserted. The handlebar 20 is fixed to the handlebar mount stay 25 by the clamps. Therefore, the handlebar 20 is coupled to the handlebar stem 24. The handlebar stem 24 is orthogonal to the handlebar 20.

A stem shaft 23 is a columnar member having one end fixed to the top bridge 21 and another end fixed to the bottom bridge 22. The stem shaft 23 is inserted through the head pipe 61 having a cylindrical shape, and links the steering device 19 and the vehicle body frame 60. The head pipe 61 is provided with a bearing 66 of the stem shaft 23, with which the head pipe 61 rotatably supports the stem shaft 23. The stem shaft 23 is parallel with the front forks 6 and is concentric with the rotation axis A1 of the steering device 19.

In this manner, according to the configuration of the present embodiment, the steering device 19 is configured by incorporating and integrating the handlebar 20, the handlebar mounts 31, the handlebar mount stay 25, the handlebar stem 24, the top bridge 21, the bottom bridge 22, the stem shaft 23, and the front forks 6. The steering device 19 is linked to the vehicle body frame 60 through the head pipe 61, and can rotate about the rotation axis A1 with respect to the vehicle body frame 60.

### 5. Restriction device

FIG. 5 also describes a restriction device 32 that restricts rotation of the steering device 19. The restriction device 32 corresponds to a restriction unit of the present invention. The restriction device 32 is configured to restrict rotation of the steering device 19 with respect to the vehicle body frame 60. The restriction device 32 includes a motor 71, a drive gear 71a, and a driven gear 23a. The motor 71 can restrict a change in the steering angle of the front wheel 3. The motor 71, the drive gear 71a, and the driven gear 23a correspond to a braking mechanism of the present invention. The braking mechanism is configured to apply braking force that brakes the rotation of the steering device 19 with respect to the vehicle body frame 60. The motor 71 is configured to generate the braking force. The drive gear 71a and the driven gear 23a are configured to transmit the braking force from the motor 71 to the steering device 19.

The motor 71 can rotate rightward and leftward, and an output shaft thereof is parallel with the stem shaft 23. The drive gear 71a is fixed to the output shaft of the motor 71 and meshes with the driven gear 23a. The driven gear 23a is fixed to the stem shaft 23. When the rotation of the steering device 19 is restricted by the restriction device 32, the motor 71 rotates in a direction against the rotation of the steering device 19. A coupling member 67 is a member that couples the head pipe 61 and a main body of the motor 71. Therefore, the main body of the motor 71 is supported by the vehicle body frame 60.

A steering angular velocity detection unit 82 corresponds to a first detection unit of the present invention. The steering angular velocity detection unit 82 is a sensor that detects steering angular velocity of the front wheel 3. The steering angular velocity detection unit 82 is configured to detect rotation of the steering device 19 with respect to the vehicle body frame 60. The steering angular velocity detection unit 82 can include, but not particularly limited to, for example, a rotary encoder that detects the steering angle of the front wheel 3 and a differential calculator that calculates the steering angular velocity on the basis of a temporal change in the steering angle. The steering angular velocity detection unit 82 detects the steering angular velocity of the front wheel 3 by detecting a rotation rate and rotation direction of the steering device 19 with respect to the vehicle body frame 60. The steering angular velocity of the front wheel in the present embodiment means a rotation rate of the front wheel 3 around the stem shaft 23. Normally, steering angular velocity of the steering device 19 coincides with the steering angular velocity of the front wheel. A steering direction of the front wheel 3 in the present embodiment means a direction in which the steering angle of the front wheel 3 changes. A steering direction of the front wheel 3 in the present embodiment means a rotation direction of the front wheel 3 around the stem shaft 23. Normally, a steering direction of the steering device 19 coincides with a steering direction of the front wheel. For example, the steering direction of the front wheel 3 is either right or left.

A restriction control unit 83 corresponds to a control unit of the present invention. The restriction control unit 83 can be implemented by, for example, a central processing unit (CPU). When the restriction control unit 83 restricts the change in the steering angle of the front wheel 3 through the motor 71, the restriction control unit 83 controls the motor 71 so as to input force, to the stem shaft 23, in a direction opposite to the steering direction of the front wheel 3. That is, when the motor 71 inputs force to the stem shaft 23, the force is applied to the steering device 19 integrated with the stem shaft 23. In this way, the change in the steering angle of the front wheel 3 is restricted. For example, "restricting the change in the steering angle of the front wheel 3" may mean completely stopping the change in the steering angle of the front wheel 3. Alternatively, "restricting the change in the steering angle of the front wheel 3" may mean reducing change in the steering angle of the front wheel 3. Specifically, the restriction control unit 83 may control the motor 71 so as to input, to the stem shaft 23, reaction force resisting the change in the steering angle of the front wheel 3. The reaction force is directed in a direction opposite to the steering direction of the front wheel 3. The reaction force may be sufficiently great to completely prevent the change in the steering angle of the front wheel 3. Alternatively, the reaction force may be relatively small, and the change in the steering angle of the front wheel 3 may not be completely forbidden. At this time, the restriction control unit 83 may control the motor 71 to input force in the opposite direction to the stem shaft 23 so as to completely prevent turning of the front wheel 3. Furthermore, the restriction control unit 83 may not completely forbid the turning of the front wheel 3, and for example, may control the motor 71 so that the turning of the front wheel 3 is gradually prevented as the front wheel 3 turns. Alternatively, the motor 71 may be controlled so that, as the front wheel 3 turns, the turning of the front wheel 3 is prevented with the same reaction force.

The restriction control unit 83 is a control unit that causes the motor 71 to restrict the change in the steering angle of the front wheel 3 in the bank direction when the steering angular velocity detected by the steering angular velocity detection unit 82 is equal to or greater than a predetermined value. When a mean value of the steering angular velocity of the front wheel 3 during a predetermined period is equal to or greater than the predetermined value, the restriction control unit 83 determines that a detected value is greater than the predetermined value. The predetermined period is 0.1 seconds or less, or 0.2 seconds or less. The restriction control unit 83 causes the motor 71 to allow the change in the steering angle of the front wheel 3 when the steering angular velocity detected by the steering angular velocity detection unit 82 is smaller than the predetermined value. Furthermore, when the value detected by the steering angular velocity detection unit 82 is equal to or greater than the predetermined value, the restriction control unit 83 allows the change in the steering angle of the front wheel 3 in the direction opposite to the bank direction. Therefore, the restriction control unit 83 operates on the basis of the steering angular velocity detection unit 82 and the gyro sensor 70. The steering angular velocity detection unit 82 is configured to detect steering angular velocity. The gyro sensor 70 is configured to detect a bank direction of the two-wheel motor vehicle 1. Hereinafter, the predetermined value of the steering angular velocity and the bank direction according to operation of the restriction control unit 83 will be described.

The predetermined value is a value that is referred to when the restriction control unit 83 decides whether or not to allow the change in the steering angle of the front wheel 3. That is, when the change in the steering angle is greater than the predetermined value, the restriction control unit 83 restricts the change in the steering angle of the front wheel 3 in the bank direction.

When the two-wheel motor vehicle 1 is about to curve, the driver banks the vehicle body. When the driver banks the vehicle body while traveling on a curve, angular velocity of a bank angle is generally 10 deg/s or less. When the bank angle changes, a steering angle of the steering device 19 changes by self-steering. Incidentally, the change in the steering angle by the self-steering increases as the angular velocity of the bank angle of the vehicle body increases. The steering angular velocity of the front wheel 3 with the self-steering depends on the angular velocity of the bank angle of the two-wheel motor vehicle 1.

Therefore, the predetermined value is set to a value greater than a general steering angular velocity of the steering device 19 when the two-wheel motor vehicle 1 travels. That is, the predetermined value is set to be greater than an upper limit value of the steering angular velocity of the front wheel 3 with the self-steering when the two-wheel motor vehicle 1 turns on the curve. Specifically, the predetermined value is greater than the steering angular velocity of the front wheel 3 with the self-steering when the angular velocity of the bank angle of the two-wheel motor vehicle 1 is 10 deg/s (10 degrees per second). Therefore, when the angular velocity of the bank angle of the two-wheel motor vehicle 1 is 10 deg/s, the restriction control unit 83 causes the restriction device 32 to allow a change in the steering angle of the front wheel 3. With this configuration, the two-wheel motor vehicle 1 can travel on a curve appropriately.

In a case of the present embodiment, the change in the steering angle of the front wheel 3 is smaller than the predetermined value when the driver simply banks the vehicle body to travel on a curve. For this reason, the change in the steering angle of the front wheel 3 is not restricted merely by the driver banking the vehicle body to travel on the curve. Specifically, the two-wheel motor vehicle 1 of the present embodiment allows a change in the steering angle of the front wheel 3 that is generated with the self-steering in which the angular velocity of the bank angle is at least 10 deg/s or less. Therefore, the two-wheel motor vehicle 1 of the present embodiment allows general banking while traveling on a curve. Accordingly, the driver can travel on the curve while appropriately banking the two-wheel motor vehicle 1.

Similarly, when the two-wheel motor vehicle 1 travels straight and the steering angular velocity detected by the steering angular velocity detection unit 82 is less than the predetermined value, the restriction control unit 83 causes the restriction device 32 to allow the change in the steering angle of the front wheel 3.

Meanwhile, when the two-wheel motor vehicle 1 is turning on the curve, the restriction control unit 83 may restrict the change in the steering angle of the front wheel 3. That is, the restriction control unit 83 restricts the change in the steering angle of the front wheel 3 when the two-wheel motor vehicle is quickly steered in a predetermined direction while turning on the curve. That is, when the value detected by the steering angular velocity detection unit 82 is equal to or greater than the predetermined value, the restriction control unit 83 restricts the change in the steering angle of the front wheel 3 in the bank direction. Meanwhile, when the value detected by the steering angular velocity detection unit 82 is equal to or greater than the predetermined value, the restriction control unit 83 allows the change in the steering angle of the front wheel 3 in the direction opposite to the bank direction.

While traveling on a curve, a skilled driver may quickly steer the two-wheel motor vehicle 1 in a direction opposite to a bank direction when, for example, gripping performance of the front wheel 3 is decreasing. With this operation, the bank angle is decreased, and a posture of the two-wheel motor vehicle 1 changes in a stable direction. Furthermore, with this operation, the driver can judge whether or not the front wheel 3 is gripping a road surface while traveling on a curve. The two-wheel motor vehicle 1 in the present embodiment allows quick steering in a direction opposite to the bank direction while traveling on a curve, and therefore the driver can perform this operation. A predetermined value is used to judge whether or not quick steering is performed on the steering device 19. Thus, when the two-wheel motor vehicle 1 is turning on a curve and the value detected by the steering angular velocity detection unit 82 is equal to or greater than the predetermined value, the restriction control unit 83 causes the restriction device 32 to allow the change in the steering angle of the front wheel 3 in the direction opposite to the bank direction. Whether a rotation direction of the steering device 19 according to the change in the steering angle does not match the bank direction can be determined by comparing an output from the steering angular velocity detection unit 82 with an output from the gyro sensor 70. This is because the steering angular velocity detection unit 82 is configured to be able to detect the rotation rate and rotation direction of steering device 19.

Meanwhile, the driver does not intentionally steer quickly in the bank direction while traveling on a curve. This is because such operation makes a posture of the two-wheel motor vehicle 1 unstable. The two-wheel motor vehicle 1 in the present embodiment is configured such that quick steering in the bank direction is restricted. That is, when the two-wheel motor vehicle 1 is turning on a curve and the value detected by the steering angular velocity detection unit 82 is equal to or greater than the predetermined value, the restriction control unit 83 causes the restriction device 32 to restrict the change in the steering angle of the front wheel 3 in the bank direction. Whether a rotation direction of the steering device 19 according to the change in the steering angle matches the bank direction can be determined by comparing an output from the steering angular velocity detection unit 82 with an output from the gyro sensor 70. This is because the steering angular velocity detection unit 82 is configured to be able to detect the rotation rate and rotation direction of steering device 19.

That is, the predetermined value is set to a value smaller than the steering angular velocity of the steering device 19, the steering angular velocity being unlikely to be generated when the two-wheel motor vehicle 1 travels. For example, it is unlikely that the angular velocity of the bank angle of the two-wheel motor vehicle 1 reaches 50 deg/s when the two-wheel motor vehicle 1 travels. The predetermined value is smaller than the steering angular velocity of the front wheel 3 when the angular velocity of the bank angle of the two-wheel motor vehicle 1 is 50 deg/s with the self-steering. Therefore, for example, when the steering angle of the front wheel 3 changes at the steering angular velocity of the front wheel 3 with the self-steering when the angular velocity of the bank angle of the two-wheel motor vehicle 1 is 50 deg/s, the steering device 19 is restricted by the restriction device 32 on the rotation in the bank direction. When the angular velocity of the bank angle of the two-wheel motor vehicle 1 is 50 deg/s, the restriction control unit 83 causes the restriction device 32 to restrict a change in the steering angle of the front wheel 3 in the bank direction. With this configuration, the two-wheel motor vehicle 1 can travel on a curve appropriately. When the two-wheel motor vehicle 1 is about to curve, the driver banks the vehicle body. Then, the steering angle of the steering device 19 changes by self-steering. However, when a disturbance from a roadway is input to the front wheel 3 at this time, the steering angle of the front wheel 3 may be inclined to change in the bank direction at a speed higher than self-steering generated when the driver banks the vehicle body. In the two-wheel motor vehicle 1 of the present embodiment, when the steering angular velocity of the front wheel 3 reaches or exceeds a certain value, the change in the steering angle of the front wheel 3 in the bank direction is restricted by the restriction control unit 83. Therefore, the two-wheel motor vehicle 1 of the present embodiment allows general banking while traveling on a curve, but restricts a sudden change in the steering angle of the steering device 19 in the bank direction due to the disturbance input to the front wheel 3. Accordingly, the driver can travel on the curve while appropriately banking the two-wheel motor vehicle 1.

Therefore, the predetermined value is preferably equal to or more than the steering angular velocity of the front wheel 3 with the self-steering when the angular velocity of the bank angle of the two-wheel motor vehicle 1 is 10 deg/s.

Thus, when the front wheel 3 experiences a significant force from at least either the steering device 19 or a road surface in contact with the front wheel 3, the steering angle of the front wheel 3 changes at steering angular velocity greater than the predetermined value.

Note that when the two-wheel motor vehicle 1 is traveling at a low speed, a change in the steering angle of the front wheel 3 is allowed regardless of whether or not the steering angular velocity of the steering device 19 is equal to or greater than the predetermined value. This point will be described below.

A vehicle speed detection unit 81 in FIG. 5 corresponds to a speed detection unit of the present invention. The vehicle speed detection unit 81 is configured to detect speed of the two-wheel motor vehicle 1. The vehicle speed detection unit 81 is a sensor that detects travel speed of the two-wheel motor vehicle 1 by detecting the rotation rate of the front wheel 3. The vehicle speed detection unit 81 inputs the travel speed of the two-wheel motor vehicle 1 to the restriction control unit 83. The restriction control unit 83 changes control of the restriction device 32 according to the detected vehicle speed. That is, when the vehicle speed is less than a predetermined speed, the restriction control unit 83 allows the change in the steering angle of the front wheel 3 regardless of whether or not the steering angular velocity of the steering device 19 is equal to or greater than the predetermined value. With such a configuration, for example, when the driver walks the two-wheel motor vehicle 1 of the present embodiment, the steering angle of the steering device 19 can be greatly changed. Furthermore, when the two-wheel motor vehicle 1 of the present embodiment is traveling at a low speed, the driver can greatly change the steering angle of the steering device 19 and quickly steer the two-wheel motor vehicle 1.

The predetermined speed is preferably 40 km/h (40 kilometer per hour). That is, the restriction control unit 83 operates assuming that the vehicle speed is high when the speed of the two-wheel motor vehicle 1 is 40 km/h. Therefore, the predetermined speed may be, for example, 40 km/h. Furthermore, the predetermined speed may be a value less than 40 km/h, such as 35 km/h, for example.

Thus, when the vehicle speed detected by the vehicle speed detection unit 81 is high that is, for example, 40 km/h or more, and the value detected by the steering angular velocity detection unit 82 is equal to or greater than a predetermined value, the restriction control unit 83 causes the restriction device 32 to restrict the change in the steering angle of the front wheel 3 in the bank direction. Furthermore, it is assumed that the speed detected by the vehicle speed detection unit 81 is low that is, for example, less than 40 km/h, and the value detected by the steering angular velocity detection unit 82 is equal to or greater than the predetermined value. At that time, the restriction control unit 83 causes the restriction device 32 to allow the change in the steering angle of the front wheel 3. Therefore, operation of the restriction control unit 83 using the above-described predetermined value is based on a premise that the vehicle speed is equal to or higher than the predetermined speed.

That is, when the speed detected by the vehicle speed detection unit 81 is 40 km/h or more, and the steering angular velocity detected by the steering angular velocity detection unit 82 is smaller than the predetermined value, the restriction control unit 83 causes the restriction device 32 to allow the change in the steering angle of the front wheel 3. Furthermore, it is assumed that the speed detected by the vehicle speed detection unit 81 is 40 km/h or more and the steering angular velocity detected by the steering angular velocity detection unit 82 is equal to or more than the predetermined value. At that time, the restriction control unit 83 causes the restriction device 32 to allow the change in the steering angle of the front wheel 3 in a direction opposite to the bank direction. Then, when the speed detected by the vehicle speed detection unit 81 is less than 40 km/h, and the steering angular velocity detected by the steering angular velocity detection unit 82 is smaller than the predetermined value, the restriction control unit 83 causes the restriction device 32 to allow the change in the steering angle of the front wheel 3.

Furthermore, when starting traveling of a stopped vehicle, the restriction control unit 83 controls the restriction device 32 on the basis of control for low-speed traveling.

### 6. Operation of restriction device

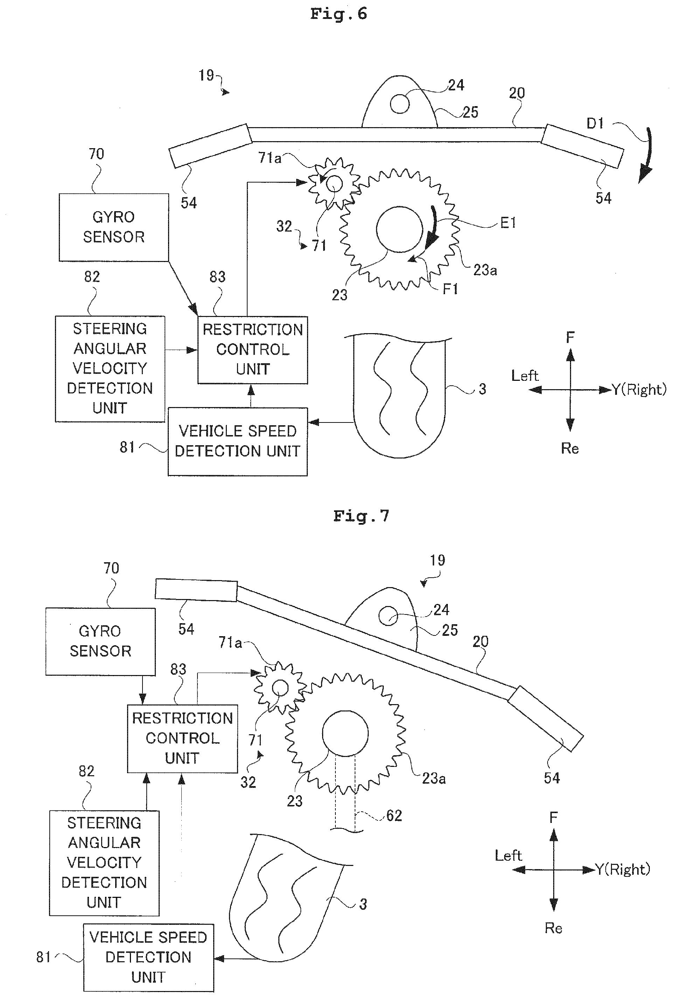

FIGS. 6 to 8 illustrate a state where the change in the steering angle of the steering device 19 is selectively restricted by the restriction control unit 83. Hereinafter, these diagrams will be described.

FIG. 6 illustrates operation of the restriction control unit 83 when the driver turns the handlebar 20 at steering angular velocity equal to or more than the predetermined value, during low-speed traveling. The vehicle speed detected by the vehicle speed detection unit 81 is always input to the restriction control unit 83. The steering angular velocity detected by the steering angular velocity detection unit 82 is always input to the restriction control unit 83. When the driver applies force D1 to the handlebar 20, force E1 acts on the stem shaft 23. Steering angular velocity exceeding the predetermined value is detected by the steering angular velocity detection unit 82 and input to the restriction control unit 83. Because the vehicle speed at this time is low, the restriction control unit 83 allows a change in the steering angle input by the driver. Then, as illustrated in FIG. 7, the restriction control unit 83 allows turning of the handlebar 20, and the steering angle of the front wheel 3 changes according to the force E1.

Note that, during a period from the state illustrated FIG. 6 to the state illustrated in FIG. 7, the restriction device 32 does not resist a change in the steering angle of the front wheel 3. For example, when the motor 71 is not driven, the restriction device 32 may not resist a change in the steering angle of the front wheel 3. In this case, the restriction control unit 83 may allow a change in the steering angle of the front wheel 3 without driving the motor 71. Alternatively, when the motor 71 is not driven, the restriction device 32 may slightly resist the change in the steering angle of the front wheel 3. In this case, the restriction control unit 83 may drive the motor 71. Then, the restriction control unit 83 may erase a slight resistance of the restriction device 32 to the change in the steering angle of the front wheel 3 by the driving force of the motor 71. As a result, the steering angle of the front wheel 3 changes according to the force E1.

During the period from the state illustrated FIG. 6 to the state illustrated in FIG. 7, the restriction device 32 may promote the change in the steering angle of the front wheel 3. For example, the restriction control unit 83 actively drives the motor 71. Accordingly, the restriction device 32 outputs force F1. The force F1 acts on the stem shaft 23. The force F1 acts in the same direction as the force E1. Resultant force of the force E1 and the force F1 rotates the stem shaft 23. The steering angle of the front wheel 3 changes according to the resultant force of the force E1 and the force F1. That is, the force F1 assists operation of the handlebar 20 by the driver.

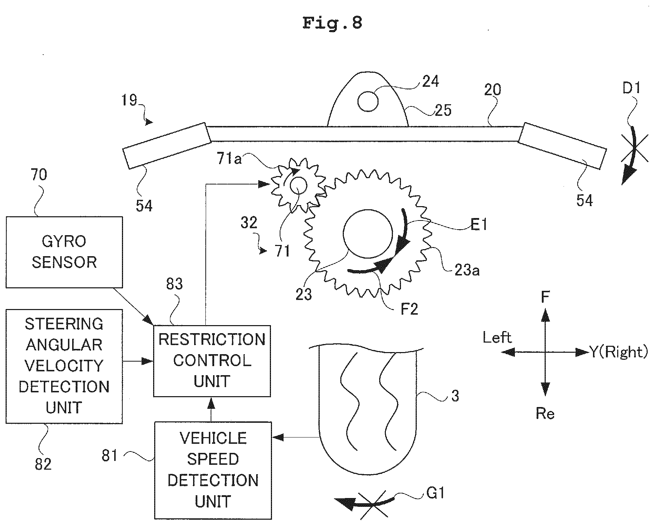

FIG. 8 illustrates operation of the restriction control unit 83 when the driver tries to turn the handlebar 20 in the bank direction at steering angular velocity equal to or more than the predetermined value, during high-speed traveling. When the driver applies force D1 to the handlebar 20, force E1 acts on the stem shaft 23. Steering angular velocity exceeding the predetermined value is detected by the steering angular velocity detection unit 82. Then, the bank direction is detected by the gyro sensor 70. The data indicating the steering angular velocity and bank direction is input to the restriction control unit 83. The vehicle speed at this time is high. Moreover, because the direction in which the handlebar 20 is turned coincides with the bank direction, the restriction control unit 83 restricts the change in the steering angle input by the driver. Then, as illustrated in FIG. 8, the restriction control unit 83 forbids turning of the handlebar 20, and a change in the steering angle of the front wheel 3 is forbidden. Specifically, the restriction control unit 83 controls the motor 71 to cause the restriction device 32 to output force F2. The force F2 acts on the stem shaft 23. The force F2 acts in a direction opposite to the direction of the force E1. The force F2 cancels out the force E1. The stem shaft 23 does not rotate. As a result, the steering angle of the front wheel 3 does not change.

Similarly, even if a force denoted by the arrow G1 in FIG. 8 is applied to the front wheel 3 due to disturbance, the restriction control unit 83 forbids the change in the steering angle of the front wheel 3. Various large and small disturbances may be input to the two-wheel motor vehicle 1. When a disturbance input is great enough to destabilize the vehicle, the restriction control unit 83 forbids the change in the steering angle of the front wheel 3 in the bank direction. Whether or not the disturbance is great is judged by whether or not the steering angular velocity of the front wheel 3 is equal to or more than the predetermined value. Whether or not the disturbance acts on a change in the steering angle of the front wheel 3 in the bank direction is judged by whether or not the steering direction coincides with the bank direction. Thus, the restriction control unit 83 operates without distinguishing between input of external force to the front wheel 3 and input to the handlebar 20 by the driver.

Meanwhile, in a case where, while traveling on a curve, the skilled driver quickly steers the two-wheel motor vehicle 1 when gripping performance of the front wheel 3 is decreasing during, so that the steering angle of the front wheel 3 changes in a direction opposite to the bank direction, the restriction control unit 83 allows the change in the steering angle (refer to FIG. 7). Accordingly, the driver can decrease the bank angle of the two-wheel motor vehicle 1 and change the posture of the two-wheel motor vehicle 1 in a direction in which the posture is stabilized. It is possible to know road-surface gripping performance of the front wheel 3 on the road surface by steering the front wheel 3 while traveling on a curve.

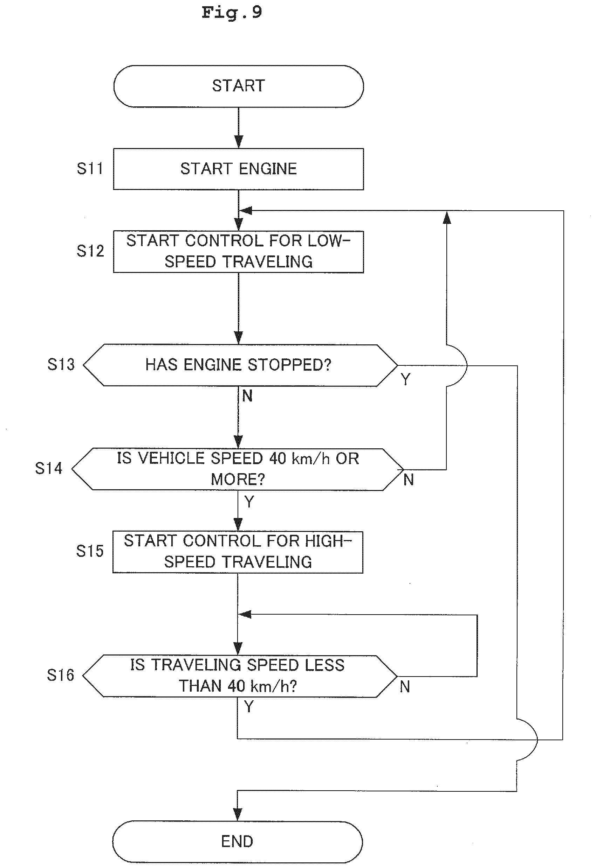

FIG. 9 is a flowchart for describing operation of the restriction device. Hereinafter, the flowchart will be described in order.

Step S 11: First, the engine 5 of the two-wheel motor vehicle 1 is started by the driver. Then, the restriction control unit 83 is also activated to start control operation. Then, the processing proceeds to Step S12.

Step S12: When activated, the restriction control unit 83 starts to control the motor 71 by control for low-speed traveling. Therefore, in this case, quick steering by the driver is allowed. The control for low-speed traveling is continued when the two-wheel motor vehicle 1 starts traveling.

Step S13: The restriction control unit 83 judges whether or not the engine 5 has stopped. "The engine 5 stops" means that traveling of the two-wheel motor vehicle 1 has ended. If the judgement is true, the processing ends. If the judgement is false, the processing proceeds to Step S14.

Step S14: The restriction control unit 83 judges whether or not the vehicle speed is 40 km/h or more. If the judgement is true, the processing proceeds to Step S15. If the judgement is false, the processing returns to Step S12.

Step S15: The restriction control unit 83 starts to control the motor 71 by control for high-speed traveling. Therefore, in this case, input of quick steering in the bank direction by the driver is restricted. Similarly, a sudden change in the steering angle of the front wheel 3 in the bank direction due to a disturbance is also restricted. Then, the processing proceeds to Step S16.

Step S16: The restriction control unit 83 judges whether or not the vehicle speed is less than 40 km/h. If the judgement is true, the processing returns to Step S12, and the control for low-speed traveling is started again. If the judgement is false, the processing returns to Step S16.

### 7. Effects of first embodiment

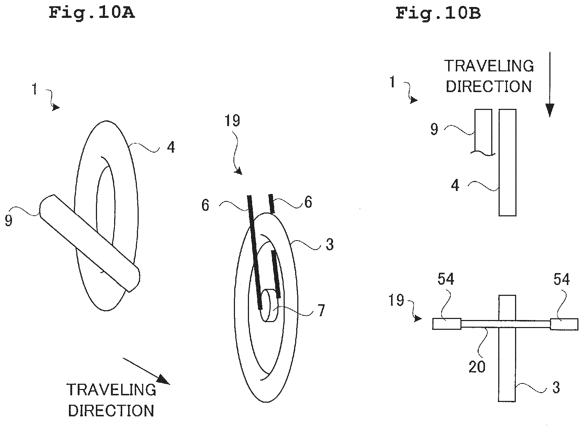

As described above, according to the present invention, it is advantageous for stabilizing the posture of the two-wheel motor vehicle 1 even if there is an input of a disturbance to the front wheel 3. FIGS. 10A to 12B are schematic views for describing advantageous effects of the present invention. In order to know the posture of the two-wheel motor vehicle 1, a muffler 9 attached to the rear wheel 4 illustrated in FIGS. 10A to 12B can be referred to. Furthermore, in order to know the posture of the two-wheel motor vehicle 1, a front axle 7 attached to the front wheel 3 illustrated in FIGS. 10A to 12B can be referred to.

FIG. 10A schematically illustrates the two-wheel motor vehicle 1 traveling straight. Because the two-wheel motor vehicle 1 is not banked at this time, the front wheel 3 and the rear wheel 4 are in contact with a road surface at a right angle. FIG. 10B is a schematic view of the two-wheel motor vehicle 1 traveling straight as viewed from above. At this time, the steering angle of the steering device 19 in the two-wheel motor vehicle 1 is 0°.

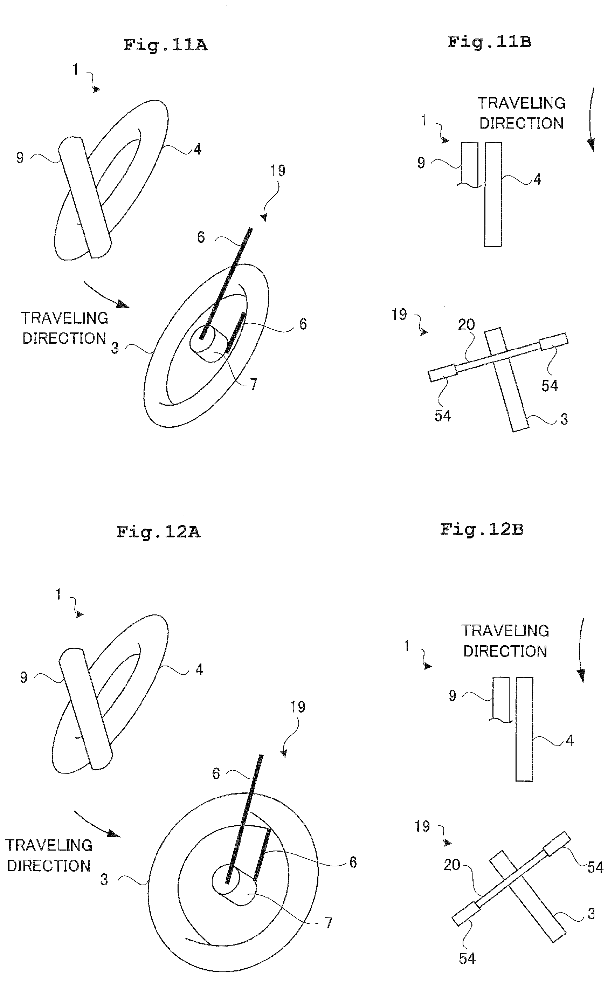

FIG. 11A schematically illustrates the two-wheel motor vehicle 1 traveling on a curve. The two-wheel motor vehicle 1 at this time is banked by a predetermined bank angle. FIG. 11B is a schematic view of the two-wheel motor vehicle 1 traveling on a curve as viewed from above. The steering device 19 in the two-wheel motor vehicle 1 at this time has a predetermined steering angle determined by self-steering.

FIG. 12A schematically illustrates a state where the two-wheel motor vehicle 1 traveling on a curve is subjected to a disturbance. When a disturbance from a road surface is input to the front wheel 3, as illustrated in FIG. 12A, the steering angle of the steering device 19 tends to further increase from the state illustrated in FIG. 11A. That is, the disturbance tries to further turn the handlebar 20 naturally steered in one direction by self-steering, in the same direction. This is because the disturbance attempts to rotate the steering device 19 in the bank direction. FIG. 12B is a schematic view of the two-wheel motor vehicle 1 traveling on a curve as viewed from above, and illustrates a state where the disturbance tries to increase the steering angle.

According to the two-wheel motor vehicle 1 of the present invention, the change in the steering angle of the steering device 19 based on a disturbance as illustrated in FIGS. 12A and 12B is inhibited. Therefore, the two-wheel motor vehicle 1 of the present invention can inhibit the posture thereof from becoming unstable even when traveling on a curve.

The two-wheel motor vehicle 1 includes the vehicle body frame 60, the steering device 19, the front wheel 3, the steering angular velocity detection unit 82, the gyro sensor 70, the restriction device 32, and the restriction control unit 83. The steering device 19 is rotatably supported by the vehicle body frame 60. The front wheel 3 is steered by the steering device 19. When the front wheel 3 is steered by the steering device 19, the steering angle of the front wheel 3 changes. The steering angular velocity detection unit 82 detects the steering angular velocity of the front wheel 3. The gyro sensor 70 detects a bank direction of the two-wheel motor vehicle 1. The restriction device 32 restricts a change in the steering angle of the front wheel 3. The restriction control unit 83 controls the restriction device 32 on the basis of a result detected by the steering angular velocity detection unit 82 and a result detected by the gyro sensor 70.

Specifically, when the value detected by the steering angular velocity detection unit 82 is equal to or greater than the predetermined value, the restriction control unit 83 causes the restriction device 32 to restrict the change in the steering angle of the front wheel 3 in the bank direction. In other words, when the detected value reaches or exceeds the predetermined value, the restriction device 32 restricts the change in the steering angle of the front wheel 3 in the bank direction. When the detected value reaches or exceeds the predetermined value, the restriction device 32 decreases the steering angular velocity of the front wheel 3 in the bank direction. A period during which the detected value reaches or exceeds the predetermined value is not a long period. The period during which the detected value is equal to or greater than the predetermined value is short. Therefore, with the configuration according to the first embodiment, it is advantageous for achieving an appropriate posture of the two-wheel motor vehicle 1 even if the detected value reaches or exceeds the predetermined value.

According to the above-described configuration, the restriction control unit 83 causes the restriction device 32 to allow the change in the steering angle of the front wheel 3 in a direction opposite to the bank direction. It is easy to decrease the bank angle by changing the steering angle of the front wheel 3 in the direction opposite to the bank direction. By decreasing the bank angle, it is more advantageous for achieving an appropriate posture of the two-wheel motor vehicle 1.

According to the above-described configuration, when the value detected by the steering angular velocity detection unit 82 is smaller than the predetermined value, the change in the steering angle of the front wheel 3 is allowed. With this configuration, when the value detected by the steering angular velocity detection unit 82 is smaller than the predetermined value, it is easy for the driver to quickly change the steering angle of the front wheel 3. Therefore, when the value detected by the steering angular velocity detection unit 82 is smaller than the predetermined value, it is easy for the driver to steer the two-wheel motor vehicle 1.

According to the above-described configuration, when the two-wheel motor vehicle 1 travels straight, the change in the steering angle of the front wheel 3 is allowed even if the detected value is equal to or greater than the predetermined value. With this configuration, it is possible to provide the two-wheel motor vehicle 1 having excellent operability when traveling straight.

According to the above-described configuration, when the two-wheel motor vehicle 1 is turning on a curve and the value detected by the steering angular velocity detection unit 82 is equal to or greater than the predetermined value, the restriction control unit 83 causes the restriction device 32 to restrict the change in the steering angle of the front wheel 3 in the bank direction. With this configuration, it is advantageous for achieving an appropriate posture of the two-wheel motor vehicle 1 when the two-wheel motor vehicle 1 turns on a curve.

According to the above-described configuration, when the two-wheel motor vehicle 1 is turning on a curve and the value detected by the steering angular velocity detection unit 82 is equal to or greater than the predetermined value, the restriction control unit 83 causes the restriction device 32 to allow the change in the steering angle of the front wheel 3 in the direction opposite to the bank direction. With this configuration, it is more advantageous for achieving an appropriate posture of the two-wheel motor vehicle 1.

According to the above-described configuration, the change in the steering angle of the front wheel 3 is allowed or not allowed depending on whether or not the speed of the two-wheel motor vehicle 1 is high. With this configuration, it is possible to provide the two-wheel motor vehicle 1 advantageous for achieving an appropriate posture while minimizing restriction on the front wheel 3.

Specifically, according to the above-described configuration, the two-wheel motor vehicle 1 includes a speed detection unit 82.

When the speed detected by the speed detection unit 82 is low, and the value detected by the steering angular velocity detection unit 82 is equal to or greater than the predetermined value, the restriction control unit 83 causes the restriction device 32 to allow the change in the steering angle of the front wheel 3. Therefore, when the speed of the straddled vehicle is low, it is easy for the driver to steer the straddled vehicle.

When the speed detected by the speed detection unit 82 is high, and the value detected by the steering angular velocity detection unit 82 is equal to or greater than the predetermined value, the restriction control unit 83 causes the restriction device 32 to restrict the change in the steering angle of the front wheel 3 in the bank direction. Therefore, when the speed of the straddled vehicle is high, it is advantageous for achieving an appropriate posture of the two-wheel motor vehicle 1.

According to the above-described configuration, the predetermined value is greater than an upper limit value of the steering angular velocity of the front wheel 3 when the two-wheel motor vehicle 1 turns on the curve with the self-steering. With this configuration, it is possible to provide the two-wheel motor vehicle 1 advantageous for achieving an appropriate posture while reliably allowing the change in the steering angle of the front wheel 3 by the self-steering.

According to the above-described configuration, the steering angular velocity of the front wheel 3 with the self-steering depends on the angular velocity of the bank angle of the two-wheel motor vehicle 1. Therefore, the steering angular velocity of the front wheel 3 by the self-steering can be accurately decided.

According to the above-described configuration, when the angular velocity of the bank angle of the two-wheel motor vehicle 1 is 50 deg/s, the restriction control unit 83 causes the restriction device 32 to restrict a change in the steering angle of the front wheel 3 in the bank direction. With this configuration, it is possible to provide the two-wheel motor vehicle 1 advantageous for achieving an appropriate posture.

According to the above-described configuration, when the angular velocity of the bank angle of the two-wheel motor vehicle 1 is 10 deg/s, the predetermined value causes the restriction device 32 to allow a change in the steering angle of the front wheel 3 in the bank direction. With this configuration, it is possible to provide the two-wheel motor vehicle 1 advantageous for achieving an appropriate posture.

According to the above-described configuration, the steering angular velocity detection unit 82 detects the steering angular velocity of the front wheel 3 by detecting a relative rotation amount of the steering device 19 with respect to the vehicle body frame 60. With this configuration, the steering angular velocity of the front wheel 3 can be reliably detected. Moreover, the acceleration of the steering angle of the front wheel 3 can be reliably detected.

According to the above-described configuration, the restriction device 32 restricts rotation of the steering device 19 with respect to the vehicle body frame 60. With this configuration, it is easy for the restriction device 32 to restrict the change in the steering angle of the front wheel 3.

According to the above-described configuration, the restriction device 32 includes the motor 71, the drive gear 71a, and the driven gear 23a. The motor 71, the drive gear 71a, and the driven gear 23a apply braking force for braking the rotation of the steering device 19 with respect to the vehicle body frame 60. With this configuration, the restriction device 32 can actively stop the rotation of the steering device 19 with respect to the vehicle body frame 60. Therefore, it is possible to provide the two-wheel motor vehicle 1 that can more reliably restrict the change in the steering angle of the front wheel 3.

### [Second embodiment]

### 8. Overview of second embodiment

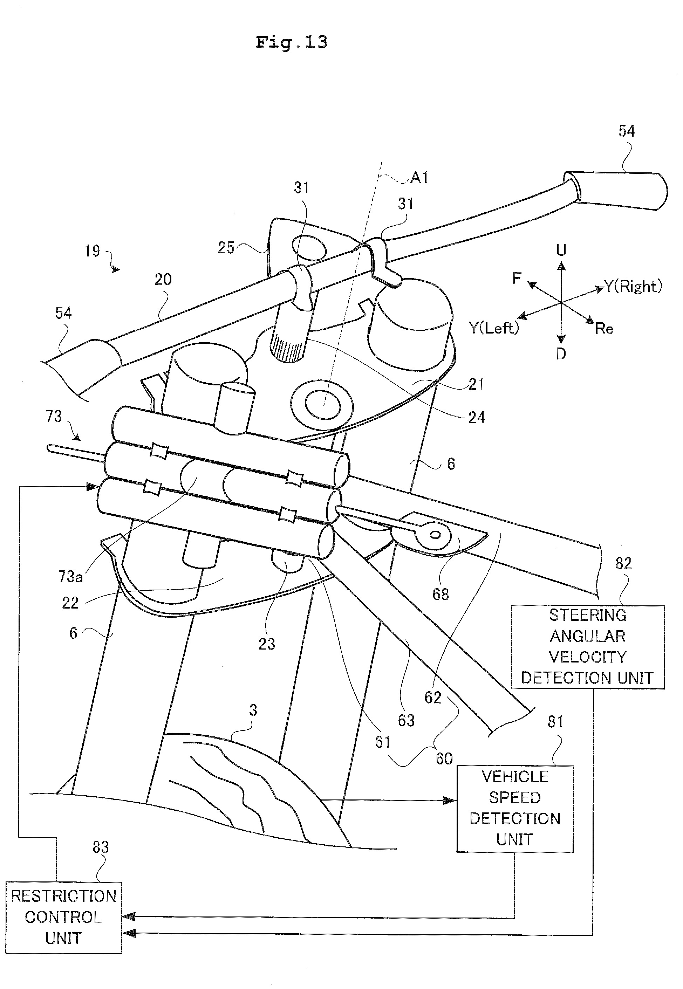

Next, a configuration of a two-wheel motor vehicle 1 according to a second embodiment will be described. As illustrated in FIG. 13, the two-wheel motor vehicle 1 according to the present embodiment includes a steering damper 73. The steering damper 73 corresponds to a restriction unit of the present invention. The steering damper 73 is a member capable of resisting rotation of a steering device 19 with respect to a vehicle body frame 60. The steering damper 73 does not always inhibit rotation of the steering device 19. The steering damper 73 inhibits or allows the rotation of the steering device 19 depending on a situation. Details of this point will be described later.

In the present embodiment, the steering angular velocity detection unit 82, the restriction device 32 (the motor 71, the drive gear 71a, and the driven gear 23a), and the coupling member 67 that are described in the first embodiment are not necessarily required.

In other configurations, the steering device 19 of the present embodiment and each member around the steering device 19 are similar to the configuration according to the first embodiment.

A bracket 73a is a member that couples the front forks 6 and the steering damper 73. A main body (cylinder tube) of the steering damper 73 is supported by the front forks 6.

A clevis 68 is a plate-shaped member provided on a top tube 62 of the vehicle body frame 60. The clevis 68 is configured to support a rod of the steering damper 73. Thus, the steering damper 73 is provided so as to bridge the vehicle body frame 60 and the steering device 19 so that the rotation of the steering device 19 with respect to the vehicle body frame 60 can be restricted. Thus, the steering damper 73 is coupled to the steering device 19 and the vehicle body frame 60.

When the steering damper 73 extends, the steering angle of the steering device 19 changes to right with respect to the vehicle body frame 60. When the steering damper 73 extends, the steering angle of the front wheel 3 changes to the right. When the steering damper 73 contracts, the steering angle of the steering device 19 changes to the left with respect to the vehicle body frame 60. When the steering damper 73 contracts, the steering angle of the front wheel 3 changes to the left.

### 9. Configuration of steering damper

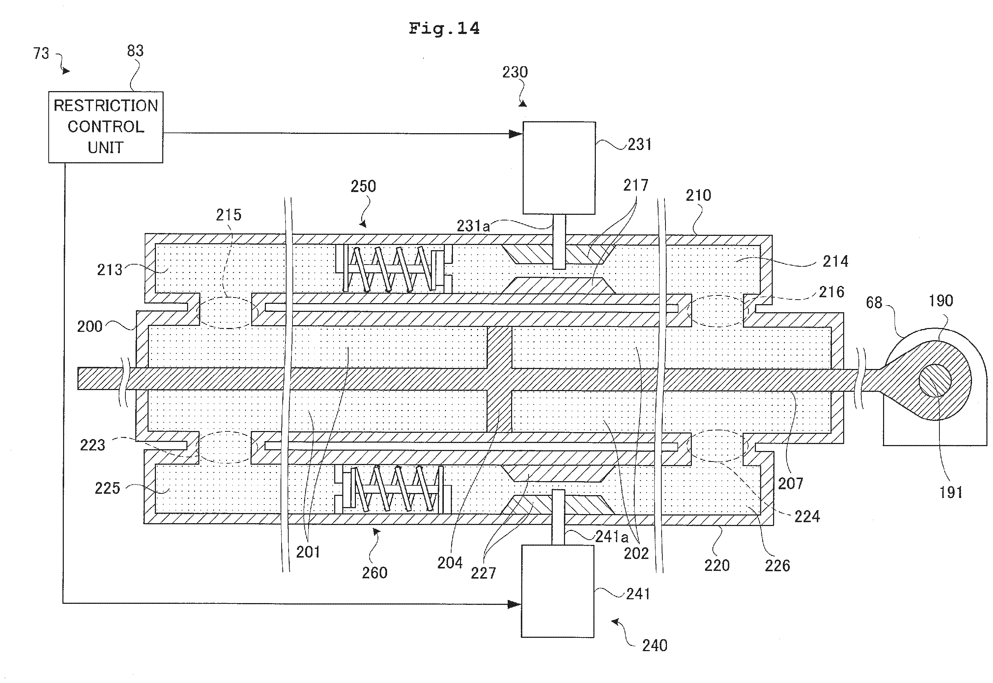

FIG. 14 illustrates a specific configuration of the steering damper 73 according to the present embodiment. The steering damper 73 includes a main tube 200, a first sub tube 210 and a second sub tube 220. At least any one of the main tube 200, the first sub tube 210, and the second sub tube 220 is supported by the front forks 6.

The main tube 200 corresponds to a cylinder tube of the present invention. The main tube 200 has a cylindrical shape. The first sub tube 210 has a cylindrical shape. The second sub tube 220 has a cylindrical shape. The main tube 200 and the first sub tube 210 are parallel with each other. The main tube 200 and the second sub tube 220 are parallel with each other. Both ends of the main tube 200 are closed, and an inside of the main tube 200 is filled with hydraulic oil. Both ends of the first sub tube 210 are closed, and an inside of the first sub tube 210 is filled with hydraulic oil. Both ends of the second sub tube 220 are closed, and an inside of the second sub tube 220 is filled with hydraulic oil. The main tube 200 has a first chamber 201 and a second chamber 202 for storing hydraulic oil. The main tube 200 is coupled to the steering device 19 via the bracket 73a.

The piston 204 is installed inside the main tube 200. A piston 204 is a member that divides an inside of the main tube 200 into the first chamber 201 and the second chamber 202, and can move in the main tube 200 in an extending direction of the main tube 200. Accordingly, sizes of the first chamber 201 and the second chamber 202 change. Therefore, the main tube 200 includes the first chamber 201 and the second chamber 202 partitioned by the piston 204. The piston 204 is configured to move by hydraulic pressure in the main tube 200.

A main shaft 207 is a member coupled to the piston 204, and is a member passing through the first chamber 201 and penetrating a closed end of the main tube 200. Furthermore, the main shaft 207 passes through the second chamber 202 from the piston 204 and penetrates the closed end of the main tube 200. Therefore, the main shaft 207 is configured to protrude from both ends of the main tube 200. One end of the main shaft 207 is connected to a clevis 68 provided on a vehicle body frame 60. The main shaft 207 has a rod end 190 connected to the clevis 68. A pin 191 is inserted into a through hole of the rod end 190 and a through hole of the clevis 68. The rod end 190, the clevis 68, and the pin 191 constitute a rotatable joint. The main shaft 207 is integrated with the piston 204, and at least a tip end thereof protrudes from one end of the main tube 200. The main shaft 207 is coupled to the vehicle body frame 60 via the clevis 68.

The first sub tube 210 has a third chamber 213 and a fourth chamber 214 for holding hydraulic oil. The third chamber 213 and the fourth chamber 214 are continuous via an electromagnetic valve 230. The electromagnetic valve 230 has a solenoid 231 and a wall portion 217. The wall portion 217 is provided for the purpose of narrowing an inner diameter of the first sub tube 210. The wall portion 217 has a cylindrical shape as a whole, and the hydraulic oil can pass through a hollow inside the wall portion 217.

The solenoid 231 has a valve body 231a capable of closing the hollow in the wall portion 217, and has a configuration capable of adjusting passing of the hydraulic oil by the valve body 231a protruding and retracting with respect to the hollow of the wall portion 217. A restriction control unit 83 controls the solenoid 231 to cause the valve body 231a to protrude and retract.

Internal spaces of the main tube 200 and the first sub tube 210 communicate with each other at two points. That is, a first passage 215 that communicates the first chamber 201 and the third chamber 213 is provided between the main tube 200 and the first sub tube 210. Furthermore, a second passage 216 that communicates the second chamber 202 and the fourth chamber 214 is provided between the main tube 200 and the first sub tube 210. The first passage 215, the third chamber 213, the fourth chamber 214, and the second passage 216 constitute a first path through which the hydraulic oil passes. The first path forbids the hydraulic oil from flowing from the first chamber 201 to the second chamber 202 and allows the hydraulic oil to flow from the second chamber 202 to the first chamber 201.

The first path does not always allow the hydraulic oil to flow from the second chamber 202 to the first chamber 201. The electromagnetic valve 230 opens and closes the first path. When the electromagnetic valve 230 is closed, the first path forbids the hydraulic oil from flowing from the second chamber 202 to the first chamber 201. When the electromagnetic valve 230 is open, the first path allows the hydraulic oil from flowing from the second chamber 202 to the first chamber 201. Meanwhile, the first path always forbids the hydraulic oil from flowing from the first chamber 201 to the second chamber 202. Regardless of whether the electromagnetic valve 230 is open or closed, the first path forbids the hydraulic oil from flowing from the first chamber 201 to the second chamber 202. This is because a check valve 250 is provided in the first path.

The steering damper 73 includes the check valve 250 provided in the first path. The check valve 250 allows the hydraulic oil from flowing from the second chamber 202 to the first chamber 201 and forbids the hydraulic oil to flow from the first chamber 201 to the second chamber 202. The check valve 250 is provided between the third chamber 213 and the electromagnetic valve 230. The check valve 250 allows the hydraulic oil to pass from the fourth chamber 214 to the third chamber 213. The check valve 250 forbids the hydraulic oil to pass from the third chamber 213 to the fourth chamber 214.

The second sub tube 220 has a fifth chamber 225 and a sixth chamber 226 for holding the hydraulic oil. The fifth chamber 225 and the sixth chamber 226 are continuous via an electromagnetic valve 240. The electromagnetic valve 240 has a solenoid 241 and a wall portion 227. The wall portion 227 is provided for the purpose of narrowing an inner diameter of the second sub tube 220. The wall portion 227 has a cylindrical shape as a whole, and the hydraulic oil can pass through a hollow inside the wall portion 227.

The solenoid 241 has a valve body 241a capable of closing the hollow in the wall portion 227, and has a configuration capable of adjusting passing of the hydraulic oil by the valve body 241a protruding and retracting with respect to the hollow of the wall portion 227. The restriction control unit 83 controls the solenoid 241 to cause the valve body 241a to protrude and retract.

Internal spaces of the main tube 200 and the second sub tube 220 communicate with each other at two points. That is, a third passage 223 that communicates the first chamber 201 and the fifth chamber 225 is provided between the main tube 200 and the second sub tube 220. Furthermore, a fourth passage 224 that communicates the second chamber 202 and the sixth chamber 226 is provided between the main tube 200 and the second sub tube 220. The third passage 223, the fifth chamber 225, the sixth chamber 226, and the fourth passage 224 constitute a second path through which the hydraulic oil passes. The second path allows the hydraulic oil from flowing from the first chamber 201 to the second chamber 202 and forbids the hydraulic oil to flow from the second chamber 202 to the first chamber 201.

The second path does not always allow the hydraulic oil to flow from the first chamber 201 to the second chamber 202. The electromagnetic valve 240 opens and closes the second path. When the electromagnetic valve 240 is closed, the second path forbids the hydraulic oil from flowing from the first chamber 201 to the second chamber 202. When the electromagnetic valve 240 is open, the second path allows the hydraulic oil from flowing from the first chamber 201 to the second chamber 202. Meanwhile, the second path always forbids the hydraulic oil from flowing from the second chamber 202 to the first chamber 201. Regardless of whether the electromagnetic valve 240 is open or closed, the second path forbids the hydraulic oil from flowing from the second chamber 202 to the first chamber 201. This is because a check valve 260 is provided in the second path.

The steering damper 73 includes the check valve 260 provided in the second path. The check valve 260 forbids the hydraulic oil from flowing from the second chamber 202 to the first chamber 201 and allows the hydraulic oil to flow from the first chamber 201 to the second chamber 202. The check valve 260 is provided between the fifth chamber 225 and the electromagnetic valve 240. The check valve 260 allows the hydraulic oil to pass from the fifth chamber 225 to the sixth chamber 226. The check valve 260 forbids the hydraulic oil to pass from the sixth chamber 226 to the fifth chamber 225.

### 10. Operation of steering damper

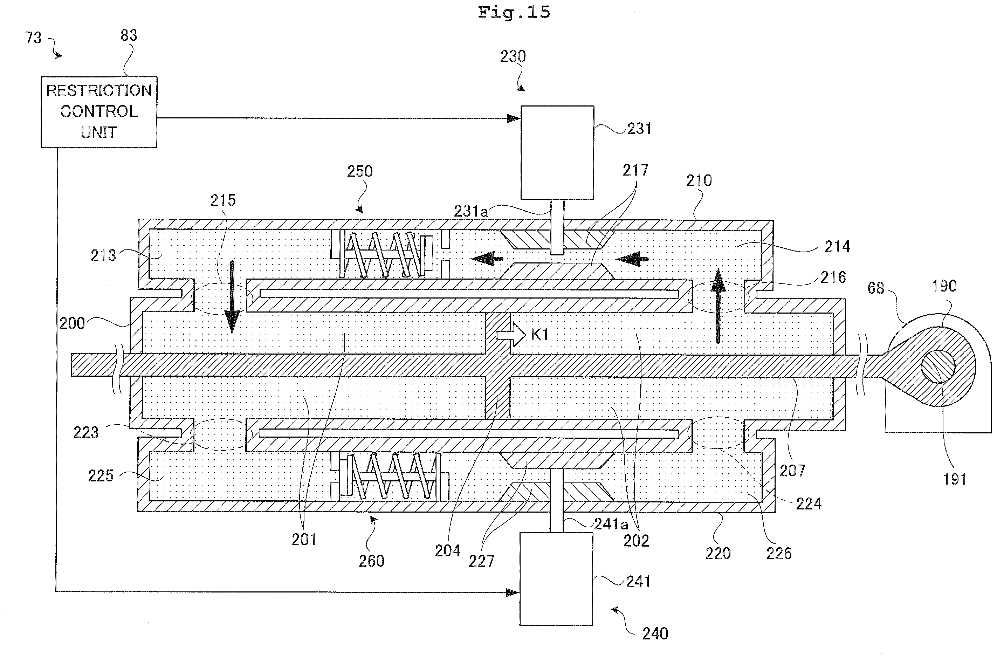

FIG. 15 is a schematic view for describing operation of the steering damper 73 according to the second embodiment. As illustrated in FIG. 15, when the valve body 231a is opened, the hydraulic oil in the second chamber 202 reaches the first chamber 201 through the first path. Specifically, the hydraulic oil in the second chamber 202 passes through the second passage 216 and the fourth chamber 214, passes through the electromagnetic valve 230 and the check valve 250, passes through the third chamber 213 and the first passage 215, and then reaches the first chamber 201. However, the hydraulic oil in the first chamber 201 is blocked by the check valve 250 and does not reach the second chamber 202.

According to FIG. 15, the valve body 241a is closed. Therefore, the electromagnetic valve 240 prevents back-and-forth flows of the hydraulic oil between the fifth chamber 225 and the sixth chamber 226. Therefore, the hydraulic oil in the first chamber 201 is blocked by the electromagnetic valve 240 and does not reach the second chamber 202.

In the case in FIG. 15, the second chamber 202 contracts, and the first chamber 201 expands. The piston 204 and the main shaft 207 move in one direction with respect to the main tube 200. The main shaft 207 protrudes from the main tube 200. The steering damper 73 extends.

Expansion of the second chamber 202 is forbidden, and contraction of the first chamber 201 is forbidden. Movement of the piston 204 and the main shaft 207 in an opposite direction with respect to the main tube 200 is forbidden. Retraction of the main shaft 207 into the main tube 200 is forbidden. Contraction of the steering damper 73 is forbidden.

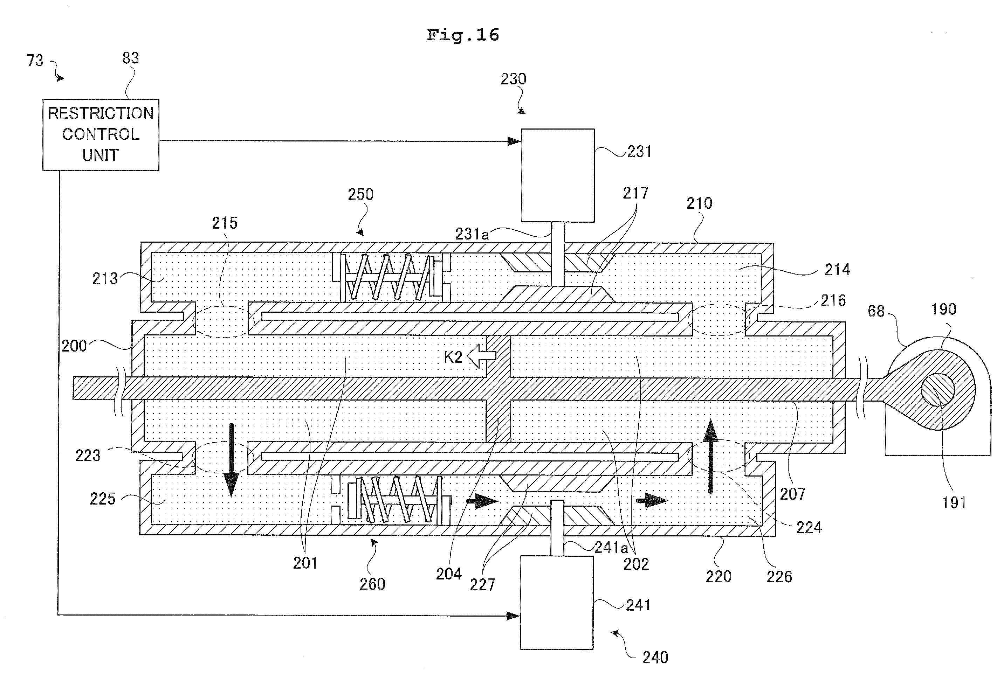

Furthermore, as illustrated in FIG. 16, when the valve body 241a is opened, the hydraulic oil in the first chamber 201 reaches the second chamber 202 through the second path. Specifically, the hydraulic oil in the first chamber 201 passes through the third passage 223 and the fifth chamber 225, passes through the check valve 260 and the electromagnetic valve 240, passes through the sixth chamber 226 and the fourth passage 224, and then reaches the second chamber 202. However, the hydraulic oil in the second chamber 202 is blocked by the check valve 260 and does not reach the first chamber 201.

According to FIG. 16, the valve body 231a is closed. Therefore, the electromagnetic valve 230 prevents back-and-forth flows of the hydraulic oil between the third chamber 213 and the fourth chamber 214. Therefore, the hydraulic oil in the second chamber 202 is blocked by the electromagnetic valve 230 and does not reach the first chamber 201.

In the case in FIG. 16, the first chamber 201 contracts, and the second chamber 202 expands. The piston 204 and the main shaft 207 move in the opposite direction with respect to the main tube 200. The main shaft 207 retracts into the main tube 200. The steering damper 73 contracts.

Expansion of the first chamber 201 is forbidden, and contraction of the second chamber 202 is forbidden. Movement of the piston 204 and the main shaft 207 in the one direction with respect to the main tube 200 is forbidden. Protrusion of the main shaft 207 from the main tube 200 is forbidden. Extension of the steering damper 73 is forbidden.

If such two types of control are used selectively, the steering damper 73 restricts a change in the steering angle of the front wheel 3 in a bank direction and allows the change in the steering angle of the front wheel 3 in a direction opposite to the bank direction.

For example, when the change in the steering angle of the front wheel 3 to the right is restricted and the change in the steering angle of the front wheel 3 to the left is allowed, the steering damper 73 is controlled as illustrated in FIG. 15. That is, the valve body 231a is opened, and the valve body 241a is closed. Then, contraction of the steering damper 73 is forbidden, and extension of the steering damper 73 is allowed. When contraction of the steering damper 73 is forbidden, a change in the steering angle of the steering device 19 to the right is forbidden by the steering damper 73. When contraction of the steering damper 73 is forbidden, the change in the steering angle of the front wheel 3 to the right is forbidden by the steering damper 73. When extension of the steering damper 73 is allowed, the change in the steering angle of the steering device 19 to the left is allowed. When extension of the steering damper 73 is allowed, the change in the steering angle of the front wheel 3 to the left is allowed.

Note that the valve body 241a in a half-open state can inhibit rightward rotation of the steering device 19. When the valve body 241a is slightly opened, slight passage of the hydraulic oil is allowed. The hydraulic oil at this time can flow from the first chamber 201 toward the second chamber 202, but a flow rate thereof is lower than a flow rate when the valve body 241a is open. Therefore, the piston 204 and the main shaft 207 can only move slowly in one direction K1. When rotating to the right, the steering device 19 experiences a reaction force from the steering damper 73. Rotational force of the rightward rotation of the steering device 19 at this time is not completely erased, but is weakened by the steering damper 73. As a result, steering angular velocity of the front wheel 3 to the right decreases. Meanwhile, because the valve body 231a is open, leftward rotation of the steering device 19 is not restricted by the steering damper 73.

Furthermore, for example, when the change in the steering angle of the front wheel 3 to the left is restricted and the change in the steering angle of the front wheel 3 to the right is allowed, the steering damper 73 is controlled as illustrated in FIG. 16. That is, the valve body 231a is closed, and the valve body 241a is opened. Then, extension of the steering damper 73 is forbidden, and contraction of the steering damper 73 is allowed. When extension of the steering damper 73 is forbidden, a change in the steering angle of the steering device 19 to the left is forbidden by the steering damper 73. When extension of the steering damper 73 is forbidden, the change in the steering angle of the front wheel 3 to the left is forbidden by the steering damper 73. When contraction of the steering damper 73 is allowed, the change in the steering angle of the steering device 19 to the right is allowed. When contraction of the steering damper 73 is allowed, the change in the steering angle of the front wheel 3 to the right is allowed.

Note that the valve body 231a in a half-open state can inhibit leftward rotation of the steering device 19. When the valve body 231a is slightly opened, slight passage of the hydraulic oil is allowed. The hydraulic oil at this time can flow from the second chamber 202 toward the first chamber 201, but a flow rate thereof is lower than a flow rate when the valve body 231a is open. Therefore, the piston 204 and the main shaft 207 can only move slowly in an opposite direction K2. When rotating to the left, the steering device 19 experiences a reaction force from the steering damper 73. Rotational force of the leftward rotation of the steering device 19 at this time is not completely erased, but is weakened by the steering damper 73. As a result, steering angular velocity of the front wheel 3 to the left decreases. Meanwhile, because the valve body 241a is open, rightward rotation of the steering device 19 is not restricted by the steering damper 73.

The restriction control unit 83 is configured to control the electromagnetic valve 230 and the electromagnetic valve 240. The electromagnetic valve 230 and the electromagnetic valve 240 correspond to a damping force adjustment unit of the present invention. The electromagnetic valve 230 and the electromagnetic valve 240 can adjust the hydraulic pressure experienced by the piston 204, according to control by a restriction control unit 83. The electromagnetic valve 230 is configured to open and close the first path. The electromagnetic valve 240 is configured to open and close the second path. At a time point when the steering angular velocity of the front wheel 3 in the bank direction reaches or exceeds equal to or greater than a predetermined value, the restriction control unit 83 closes the electromagnetic valve 230 or the electromagnetic valve 240 to make it difficult for the piston 204 to move in the one direction K1 or the opposite direction K2. Therefore, in this case, quick steering by the driver is restricted. Similarly, a sudden change in the steering angle of the front wheel 3 due to a disturbance is also restricted. When a predetermined time elapses after the electromagnetic valve 230 or the electromagnetic valve 240 is closed, the electromagnetic valve 230 and the electromagnetic valve 240 are opened, and the steering damper 73 releases the restriction on the change in the steering angle of the front wheel 3. As a result, quick steering is allowed again.

As described above, when stopping the change in the steering angle of the front wheel 3 in the bank direction, the restriction control unit 83 controls the electromagnetic valve 230 and the electromagnetic valve 240 to close one of the second path and the first path. When allowing the change in the steering angle of the front wheel 3 in a direction opposite to the bank direction, the restriction control unit 83 controls the electromagnetic valve 230 and the electromagnetic valve 240 to open another of the second path and the first path.

Operation of the steering damper 73 can be described with reference to the flowchart described with reference to FIG. 9. Hereinafter, the flowchart will be described in order.

Step S11: First, the engine 5 of the two-wheel motor vehicle 1 is started by the driver. Then, the restriction control unit 83 is also activated to start control operation. Then, the processing proceeds to Step S12.

Step S12: When activated, the restriction control unit 83 starts to control the electromagnetic valve 230 and the electromagnetic valve 240 under control for low-speed traveling. Both the electromagnetic valve 230 and the electromagnetic valve 240 are opened, and the piston 204 easily moves. Therefore, in this case, quick steering by the driver is allowed. The control for low-speed traveling is continued when the two-wheel motor vehicle 1 starts traveling.

Step S13: The restriction control unit 83 judges whether or not the engine 5 has stopped. If the judgement is true, the processing ends. If the judgement is false, the processing proceeds to Step S14.

Step S14: The restriction control unit 83 judges whether or not the vehicle speed is 40 km/h or more. If the judgement is true, the processing proceeds to Step S15. If the judgement is false, the processing returns to Step S12.

Step S15: The restriction control unit 83 starts to control the electromagnetic valve 230 and the electromagnetic valve 240 under control for high-speed traveling. The restriction control unit 83 starts opening and closing of the electromagnetic valves 230, 240 as necessary from this time point. Then, the processing proceeds to Step S16.

Step S16: The restriction control unit 83 judges whether or not the vehicle speed is less than 40 km/h. If the judgement is true, the processing returns to Step S12, and the control for low-speed traveling is started again. If the judgement is false, the processing returns to Step S16.

### 11. Effects of configuration of second embodiment

The above-described configuration includes the steering damper 73. The steering damper 73 includes the main tube 200, the piston 204, the main shaft 207, the electromagnetic valve 230, and the electromagnetic valve 240. The electromagnetic valve 230 and the electromagnetic valve 240 can adjust the hydraulic pressure experienced by the piston 204, according to control by the restriction control unit 83. With this configuration, the restriction unit can be configured by using an existing component with high reliability.

### 12. Modifications

The present invention is not limited to the above-described configuration, and modifications can be made as follows.

### <Modification 1>

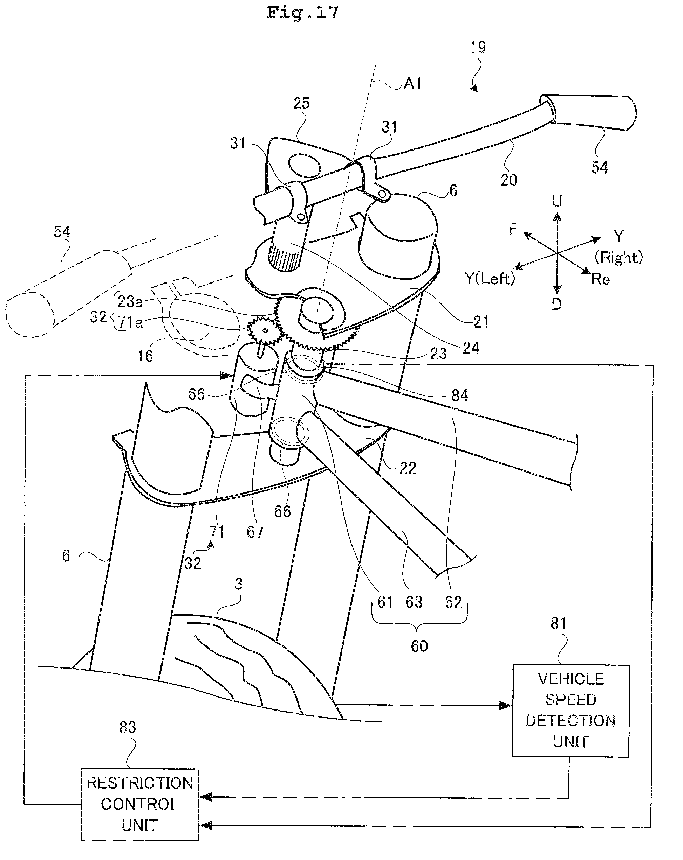

In the above-described embodiment, the change in the steering angle of the front wheel 3 is detected by the steering angular velocity detection unit 82, but the present invention is not limited to this configuration. As illustrated in FIG. 17, the acceleration of the steering angle may be detected by an acceleration sensor 84 instead of the steering angular velocity detection unit 82. The acceleration sensor 84 is a sensor that detects acceleration of a steering angle of the front wheel 3. The acceleration sensor 84 corresponds to a first detection unit of the present invention.

In Modification 1, the predetermined value is greater than an upper limit value of the acceleration of the steering angle at the front wheel 3 when the two-wheel motor vehicle 1 turns a curve with the self-steering. When a mean value of the acceleration of the steering angle of the front wheel 3 during the predetermined period is equal to or greater than the predetermined value, the restriction control unit 83 determines that the detected value is greater than the predetermined value. The predetermined period is 0.1 seconds or less, or 0.2 seconds or less.

Also in Modification 1, a period during which the detected value reaches or exceeds the predetermined value is not a long period. The period during which the detected value is equal to or greater than the predetermined value is short. Therefore, with the configuration according to Modification 1, it is advantageous for achieving an appropriate posture of the two-wheel motor vehicle 1 even if the detected value reaches or exceeds the predetermined value.

### <Modification 2>

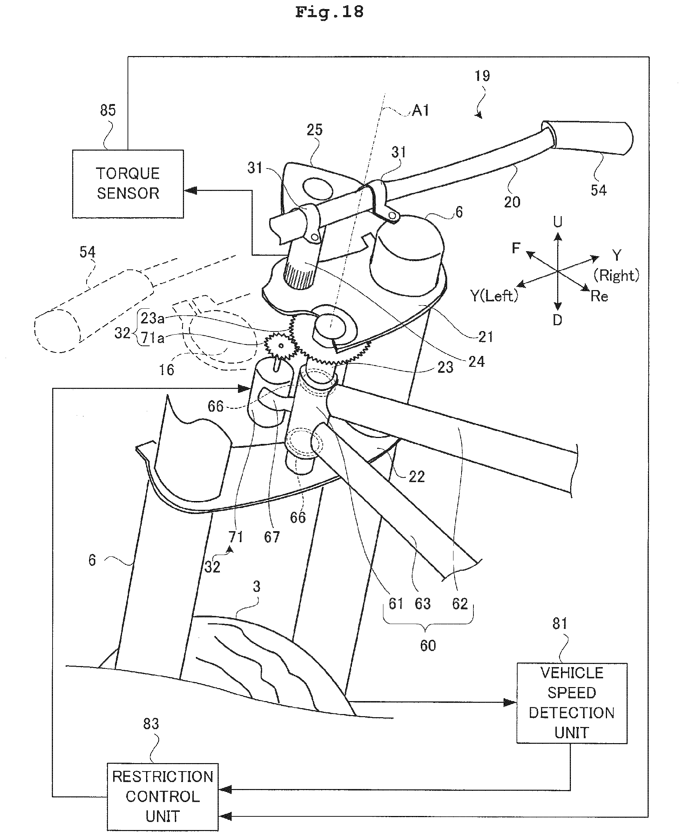

In the above-described embodiment, the change in the steering angle of the front wheel 3 is detected by the steering angular velocity detection unit 82, but the present invention is not limited to this configuration. As illustrated in FIG. 18, the change in the steering angle may be detected by a torque sensor 85 that detects steering torque applied to the handlebar stem 24. The torque sensor 85 detects a twist between a first end and second end of the handlebar stem 24. The first end of the handlebar stem 24 is coupled to the front forks 6. The second end of the handlebar stem 24 is coupled to the handlebar 20. The torque sensor 85 is a sensor that detects steering torque of the front wheel 3. The torque sensor 85 is a magnetostrictive sensor that detects twist of the steering device 19. The torque sensor 85 corresponds to a first detection unit of the present invention.

According to the configuration of Modification 2, the steering device 19 includes the front forks 6, the handlebar stem 24, and the handlebar 20. The torque sensor 85 detects torque around the handlebar stem 24, the torque being applied to the handlebar stem 24.

In Modification 2, the predetermined value is greater than an upper limit value of the steering torque at the front wheel 3 when the two-wheel motor vehicle 1 turns a curve with the self-steering. When a mean value of the steering torque of the front wheel 3 during a predetermined period is equal to or greater than the predetermined value, the restriction control unit 83 determines that a detected value is greater than the predetermined value. The predetermined period is 0.1 seconds or less, or 0.2 seconds or less.

Also in Modification 2, a period during which the detected value reaches or exceeds the predetermined value is not a long period. The period during which the detected value is equal to or greater than the predetermined value is short. Therefore, according to Modification 2, it is advantageous for achieving an appropriate posture of the two-wheel motor vehicle 1 even if the detected value reaches or exceeds the predetermined value.

The first detection unit is a torque sensor that detects twist of the steering device. According to such a configuration, the first detection unit can be configured with a small number of components.

The torque sensor 85 reliably detects a change in a relative position between the front forks 6 and the handlebar 20 with twist of the handlebar stem 24. Therefore, the torque sensor 85 can reliably detect torque input to the steering device 19.

### <Modification 3>

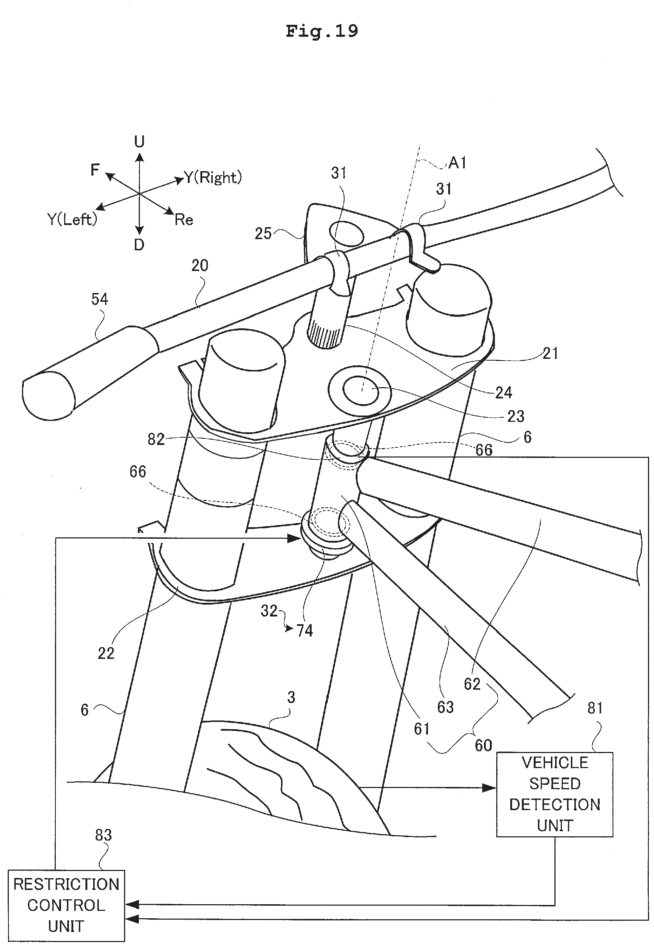

The restriction device 32 includes the motor 71 in the first embodiment described above, but the present invention is not limited to this configuration. As illustrated in FIG. 19, a drum brake 74 may be provided as the restriction device 32. The drum brake 74 is provided in the head pipe 61, and can brake rotation of the stem shaft 23 passing through a hollow of the head pipe 61. The restriction control unit 83 restricts the change in the steering angle of the front wheel 3 by operating the drum brake 74 as necessary.

### <Modification 4>

In the second embodiment described above, the main tube 200 is coupled to the steering device 19, and the main shaft 207 is coupled to the vehicle body frame 60. However, the couplings among the steering damper 73, the steering device 19, and the vehicle body frame 60 are not limited thereto. For example, the main tube 200 may be coupled to the vehicle body frame 60, and the main shaft 207 may be coupled to the steering device 19.

### <Modification 5>

The present invention relates to the two-wheel motor vehicle 1, but the present invention is not limited to this configuration. The present invention can also be applied to other straddled vehicles. For example, there is one rear wheel 4. The number of the rear wheel 4 is not limited thereto. There may be two rear wheel 4.

## Claims

1. A straddled vehicle (1) comprising:
a vehicle body frame (60);
a steering device (19) rotatably supported by the vehicle body frame (60);
a front wheel (3) that is steered by the steering device (19) and changes a steering angle of the steering device (19);
a first detection unit (84) that detects at least any one of steering angular velocity of the front wheel (3), acceleration of a steering angle of the front wheel (3), and steering torque of the front wheel (3);
a posture detection unit (70) that detects a bank direction of the straddled vehicle (1);
a restriction unit (32) that is able to restrict a change in a steering angle of the front wheel (3); and
a control unit (83) that causes the restriction unit (32) to restrict a change in the steering angle of the front wheel (3) in the bank direction when a value detected by the first detection unit (84) is equal to or greater than a predetermined value.

2. The straddled vehicle according to claim 1, wherein
when the value detected by the first detection unit (84) is equal to or greater than the predetermined value, the control unit (83) causes the restriction unit (32) to allow a change in the steering angle of the front wheel (3) in a direction opposite to the bank direction.

3. The straddled vehicle according to claim 1, wherein
when the value detected by the first detection unit (84) is smaller than the predetermined value, the control unit (83) causes the restriction unit (32) to allow a change in the steering angle of the front wheel (3).

4. The straddled vehicle according to claim 1, wherein
the control unit (83) causes the restriction unit (32) to allow a change in the steering angle of the front wheel (3) when the straddled vehicle (1) is traveling straight, and the value detected by the first detection unit (84) is equal to or greater than the predetermined value, and
the control unit (83) causes the restriction unit (32) to restrict a change in the steering angle of the front wheel (3) in the bank direction when the straddled vehicle is turning on a curve, and the value detected by the first detection unit (84) is equal to or greater than the predetermined value.

5. The straddled vehicle according to claim 4, wherein
when the straddled vehicle is turning on a curve, and the value detected by the first detection unit (84) is equal to or greater than the predetermined value, the control unit (83) causes the restriction unit (32) to allow a change in the steering angle of the front wheel (3) in a direction opposite to the bank direction.

6. The straddled vehicle according to claim 1, further comprising a speed detection unit (81, 82) that detects speed of the straddled vehicle, wherein
the control unit (83) causes the restriction unit (32) to allow a change in the steering angle of the front wheel (3) when the speed detected by the speed detection unit (81, 82) is low, and the value detected by the first detection unit (84) is equal to or greater than the predetermined value, and
the control unit (83) causes the restriction unit (32) to restrict a change in the steering angle of the front wheel (3) in the bank direction when the speed detected by the speed detection unit (81, 82) is high, and the value detected by the first detection unit (84) is equal to or greater than the predetermined value.

7. The straddled vehicle according to claim 1, wherein
the predetermined value is greater than an upper limit value of steering angular velocity of the front wheel (3) with self-steering when the straddled vehicle (1) turns on a curve,
the predetermined value is greater than an upper limit value of acceleration of a steering angle of the front wheel (3) with self-steering when the straddled vehicle (1) turns on a curve, or
the predetermined value is greater than an upper limit value of steering torque of the front wheel (3) with self-steering when the straddled vehicle turns (1) on a curve.

8. The straddled vehicle according to claim 7, wherein
steering angular velocity of the front wheel (3) with the self-steering, acceleration of a steering angle of the front wheel (3) with the self-steering, or steering torque of the front wheel (3) with the self-steering depends on angular velocity of a bank angle of the straddled vehicle (1).

9. The straddled vehicle according to claim 1, wherein
the control unit (83) causes the restriction unit (32) to restrict a change in the steering angle of the front wheel (3) in the bank direction when angular velocity of a bank angle of the straddled vehicle (1) is 50 deg/s.

10. The straddled vehicle according to claim 1, wherein
the control unit (83) causes the restriction unit (32) to allow a change in the steering angle of the front wheel (3) when angular velocity of a bank angle of the straddled vehicle (1) is 10 deg/s.

11. The straddled vehicle according to claim 1, wherein
the first detection unit (84) detects rotation of the steering device (19) with respect to the vehicle body frame (60).

12. The straddled vehicle according to claim 1, wherein
the first detection unit (84) is a torque sensor that detects twist of the steering device (19).

13. The straddled vehicle according to claim 1, wherein
the restriction unit (32) restricts rotation of the steering device (19) with respect to the vehicle body frame (60).

14. The straddled vehicle according to claim 1, wherein
the restriction unit (32) includes
a braking mechanism that applies braking force for braking rotation of a steering device (19) with respect to the vehicle body frame (60).

15. The straddled vehicle according to claim 1, wherein
the restriction unit (32) is a steering damper (73) that resists rotation of a steering device (19) with respect to a vehicle body frame (60), and
the steering damper (73) includes
a cylinder tube (200),
a piston (204) that moves by hydraulic pressure in the cylinder tube (200),
a main shaft (207) integrated with the piston (204), in which at least a tip end of the main shaft (207) protrudes from one end of the cylinder tube (200), and
a damping force adjustment (240) unit that is able to, according to control by the restriction unit (32), adjust hydraulic pressure experienced by the piston (204).
